# EUROPEAN PATENT APPLICATION

(11) **EP 1 477 619 A1**
(43) Date of publication of application: **17.11.2004**
(21) Application number: 03705224.8
(22) Date of filing: 17.02.2003
(51) Int. Cl.: E04B 1/41, B28D 1/14

(54) **POST-CONSTRUCTION ANCHOR, AND DRILL BIT FOR DRILLING PREPARED HOLES THEREFOR**

(30) Priority: 21.02.2002 JP 2002044136; 12.09.2002 JP 2002266300
(71) Applicant: Kabushiki Kaisha Zen Kenchiku Sekkei Jimusho, Tokyo 107-0061 (JP)
(72) Inventor: SATO, Yoshinori, Setagaya-ku, Tokyo 154-0023 (JP)
(74) Representative: Grünecker, August, Dipl.-Ing.
(86) International application number: PCT/JP2003/001632
(87) International publication number: WO 2003/071042

(57) **Abstract**

An anchor 1 adapted to an undercut-type prepared hole 19 having near the hole bottom thereof a diameter expanded in a taper way and including a sleeve 2 having an expansion part 6 and a plug 3 formed with a tapered part 14 inserted into the sleeve 2 for expanding the expansion part 6. When the plug 3 is hammered with the sleeve 2 contacting the bottom of the prepared hole, an annular projecting part 13 and an engagement groove 7 are engaged in a concavo-convex way as the expansion part 6 expands to contact a tapered surface 21a of the prepared hole 19. At the same time, by a hole-bottom reaction force generated by the plug 3 contacting the bottom of the prepared hole 19, a construction is completed with the expansion part 6 making press contact with the tapered surface 21 a of the prepared hole. Concurrently with completion of the construction, the tensile strength equal to that of the steel product and the like can be obtained immediately without adding an external tensile force.

## Description

### Technical Field

The present invention relates to improvements in a post-construction anchor that is buried in an existing concrete structure and the like after the concrete structure is drilled, and more particularly, to a mechanical and undercut-type post-construction anchor that can obtain the pulling resistance equal to the tensile strength of steel products and the like.

### Background Art

Conventionally, there are various structures as this type of post-construction anchor. Particularly, in recent years, because of a demand of earthquake-resistant reinforcement and the like, a so-called undercut-type post-construction anchor is proposed that can obtain the pulling resistance equal to the tensile strength of steel products and the like (refer, for example, to a brochure of WO 01/06070).

More specifically, the typical post-construction anchor comprises a sleeve having an expansion part and a plug (expanding member) inserted thereinto for expanding the expansion part. Basically, after inserting the anchor into a prepared hole, the plug or sleeve itself is hammered to expand the expansion part by relative displacement between the two, and then the sleeve is fixed as anchor to the concrete structure and the like. On the other hand, the undercut-type post-construction anchor is designed to obtain an anchor effect such that a prepared hole is drilled beforehand in a concrete structure where the anchor is to be buried, the hole bottom thereof is extended in a taper (skirt) way or in a truncated cone in a cross-section, and the expansion part of a sleeve is expanded and then closely contacted with the tapered surface. It is considered to dramatically enhance pulling resistance as compared with the case where a typical straight hole is uses as prepared hole.

However, with the undercut-type post-construction anchors having been proposed so far, the anchor in itself cannot self-maintain the state of closely contacting the expansion part with the tapered surface of the prepared hole, still leaving room for improvement.

More specifically, once the expansion part is expanded in order to closely contact with the tapered surface of the prepared hole, it is accompanied by springback more or less. Thus, the close contact state is insufficient, and the expansion part does not conform and closely contact with the tapered surface until the pulling force is loaded. On the other hand, when the pulling force is unloaded, the close contact state of the expansion part with the tapered surface of the prepared hole again becomes insufficient, and a clearance might be created therebetween. Therefore, when the pulling force is again loaded after unloaded, the initial load might unfavorably produce the pullout of the anchor.

The invention has been made as focusing attention on these problems. Particularly, an object is to provide an undercut-type post-construction anchor which can immediately obtain the pulling resistance equal to the tensile strength of the steel product and the like without relying on the external pulling force and the like once the construction is completed, and can self-maintain that state for a long time.

Furthermore, an object is to provide an undercut-type post-construction anchor in consideration that the state of construction being completed can be obtained as a tactile feel once the construction is completed, skills are not required in construction, and variations of individual builders are not produced in the constructed state.

### Disclosure of the Invention

An invention as claimed in claim 1 is directed to a post-construction anchor comprising a sleeve having an expansion part and a plug formed with a tapered part inserted into the sleeve for expanding the expansion part, the anchor being adapted to an undercut-type prepared hole having near a bottom thereof a diameter expanded in a taper way, characterized in that when the plug is hammered with the sleeve contacting the bottom of the prepared hole, an inner peripheral surface of the expansion part is engaged with an outer peripheral surface of the plug in a concavo-convex way as the expansion part expands until the expansion part makes close contact with the tapered surface of the prepared hole in accordance with relative displacement between the expansion part and the plug, and that, at the same time, by a hole-bottom reaction force generated by the plug contacting the bottom of the prepared hole, construction is completed with the expansion part making press contact with the tapered surface of the prepared hole.

Here, as claimed in claim 2, in terms of obtaining a tactile feel concurrently with completion of the construction, it is more desirable that an annular engagement groove is formed in the inner peripheral surface of the expansion part, and an annular projecting part is formed on the outer peripheral surface of the plug, and that the engagement groove is engaged with the annular projecting part in a concavo-convex way when the expansion part expands to contact the tapered surface of the prepared hole in accordance with the relative displacement between the expansion part and the plug.

Furthermore, as claimed in claim 3, it is desirable that, with the expansion part being unexpanded, a flange part at a distal end of the plug is locked at an inner periphery opening edge at a distal end of the sleeve for preventing disengagement of the sleeve from the plug. Moreover, as claimed in claim 4, it is more desirable that, with the expansion part being unexpanded, the outer peripheral surface of the plug is engaged with the inner peripheral surface of the sleeve in a concavo-convex way for preventing disengagement of the plug from the sleeve, and as a consequence, the flange part at the distal end of the plug is locked at an inner periphery opening edge at the distal end of the sleeve for preventing disengagement of the sleeve from the plug.

Therefore, in the invention as claimed in claims 1 to 4, by hammering of the plug, the tapered surface of the plug expands gradually outwardly the expansion part of the sleeve in a skirt way. Concurrently with the expansion part making close contact with the tapered surface of the prepared hole, the inner peripheral surface of the expansion part is engaged with the outer peripheral surface of the plug in a concavo-convex way, and then the construction is completed when the plug contacts the bottom of the prepared hole.

At this time, a tactile feel can be obtained by the concavo-convex engagement of the inner peripheral surface of the expansion part with the outer peripheral surface of the plug, that is, the concavo-convex engagement of the engagement groove of the inner peripheral surface of the expansion part with the annular projecting part of the outer peripheral surface of the plug. In addition, impact sound changes suddenly when the plug contacts the bottom of the prepared hole, thereby allowing easy realization of completion of the construction.

Then, in the state of completion of the construction, the expansion part makes close contact with the tapered surface of the prepared hole by a reaction force from the tapered surface of the prepared hole. In addition to the concavo-convex engagement, a hole-bottom reaction force generated by the plug contacting the bottom of the prepared hole pushes back the plug itself in the direction opposite to the hammering direction. Consequently, the hole-bottom reaction force works as a force of further expanding the expansion part in the concavo-convex engagement part. This is nothing more or less than bringing the expansion part into press contact with the tapered surface of the prepared hole all the time. The state of completion of the construction is self-maintained, failing to cause insufficient press contact or occurrence of a clearance. With this, concurrently with completion of the construction, the pulling resistance equal to the tensile strength of the steel product and the like can be obtained immediately by the anchor alone without relying on an external pulling force and the like.

More specifically, according to the invention as claimed in claims 1 and 2, concurrently with completion of the construction, the pulling resistance equal to the tensile strength of the steel product and the like can be obtained immediately without relying on an external pulling force and the like. Therefore, this provides not only a great contribution to an improvement in performance of the anchor without insufficient anchor effect, nor possible disengagement of the anchor, but also possibility of self-maintaining the state with excellent pulling resistance for a long time.

In addition, once the construction is completed, the state of completion of the construction can be realized at least by occurrence of a tactile feel and change in impact sound. Thus, no skills are required for construction, and no variations due to builders are generated in the construction state, achieving excellent workability as well.

Moreover, according to the invention as claimed in claims 3 and 4, anti-disengagement is substantially provided to the plug and the sleeve, thus achieving not only excellent handling-ability, but also excellent workability, particularly, without having disengagement of one member even upon upward construction.

The invention as claimed in claim 5 is made on the premise of recitation of any one of claims 1 to 4 to further specify the shape of the prepared hole, and is characterized in that the prepared hole is formed with a straight hole part having a diameter smaller than that of a prepared hole general part, the straight hole part being continuously formed with a bottom of a tapered hole part having a diameter expanded in a taper way, and that the unexpanded expansion part contacts the bottom of the tapered hole part prior to expansion of the expansion part, whereas the distal end of the plug contacts a bottom of the straight hole part upon completion of the construction.

Thus, according to the invention as claimed in claim 5, when the anchor is inserted into the prepared hole, the unexpanded expansion part contacts the bottom of the tapered hole part to restrict its position, so that the position of the tapered hole part and that of the expansion part coincide with each other only after this time point.

More specifically, according to the invention as claimed in claim 5, by the expansion part contacting the bottom of the tapered hole part, the positions of the two can accurately coincide with each other due to the prepared hole of particular shape, having an advantage of possible prevention of occurrence of incomplete construction.

The invention as claimed in claim 6 is made on the premise of claim 5, and is characterized in that the plug is formed in a stepped shank, and that the unexpanded sleeve is inserted into and supported in a small-diameter shank part to thereby set an outer diameter of a general part of the plug and that of a general part of the unexpanded sleeve at roughly the same dimension.

Therefore, according to the invention as claimed in claim 6, insertion of the anchor into the prepared hole can be carried out smoothly.

More specifically, according to the invention as claimed in claim 6, the outer diameter of the sleeve and that of the general part of the plug are formed substantially at roughly the same dimension, thus having an advantage that smooth insertion of the anchor into the prepared hole can be carried out more smoothly.

The invention as claimed in claim 7 is made on the premise of any one of claims 1 to 6 to clearly define that the plug is formed with a female thread part considering coupling of a counterpart member to the anchor. It is without saying that a male thread part can be formed in the plug instead of the female thread part as required.

Likewise, the invention as claimed in claim 8 is made on the premise of any one of claims 1 to 6 to clearly define that the plug is a deformed bar for reinforced concrete. This deformed bar is used, for example, as a joint bar for earthquake-resistant reinforcement of a concrete structure.

Thus, according to the invention as claimed in claims 7 and 8, the same advantages as those of the invention as claimed in claims 1 and 2 can be obtained.

Furthermore, the invention as claimed in claim 9 clearly defines that helical grooves of thread groove shape are formed in the outer peripheral surface of the plug, considering the concurrent use of an adhesive.

Therefore, according to the invention as claimed in claim 9, the helical grooves are formed in the outer peripheral surface of the plug, thus having an advantage that the adhesive is surely held when used concurrently, for example, in addition to an anchor effect of the anchor itself.

The invention as claimed in claim 10 is made on the premise of the invention as claimed in any one of claims 1 to 9, and is characterized in that the plug is formed with a restraint ring which can receive a part of the sleeve, and that, at the final stage of expanding the expansion part, an end of the restraint ring abuts on the outer peripheral surface of the expansion part to restrain an expanded bend part.

In this case, as claimed in claim 11, in terms of improving the accuracy of relative positioning between the two, it is desirable that a groove engaged with the end of the restraint ring is formed in the outer peripheral surface of the expansion part. Moreover, as claimed in claim 12, it is desirable that the restraint ring is fixed to the plug beforehand by press-fit or welding.

Thus, according to the invention as claimed in claims 10 to 12, the expansion part, which is a part of the sleeve, expands outwardly by being pressed from the inside by the plug in accordance with the relative displacement between the sleeve and the plug, and at the same time, parts of the sleeve other than the expansion part gradually come into the restraint ring. On the other hand, when expansion of the expansion part comes at the final stage, the end of the restraint ring abuts on the outer peripheral surface of the expanded expansion part. In the case where the groove is formed in the outer peripheral surface of the expansion part, the end of the restraint ring is engaged with the groove. Thus, expansion of the expansion part, and by extension, the construction, is completed with the expanded bend part of the expansion part restrained by the plug from the inside and by the restraint ring from the outside.

This is nothing more or less than autonomously locking the expansion state of the expansion part by the anchor itself, and not by the prepared hole, stabilizing the expansion state of the expansion part and providing a significant advantage in terms of preventing springback of the expansion part.

Here, as claimed in claim 2 or 3, even with the engagement groove of the inner peripheral surface of the expansion part and the annular projecting part of the outer peripheral surface of the plug are engaged in a concavo-convex way, when an external force in the disengagement direction works on the plug, for example, to cause slight relative displacement of the plug and the sleeve in the axial direction, the expanded expansion part making press contact with the tapered surface is going to return to the diameter decreasing direction. Thus, a clearance can be produced between the expansion part and the counterpart tapered surface.

Then, as countermeasures against this problem, as claimed in claim 13, it is desirable that the annular projecting part of the outer peripheral surface of the plug at a part near the top includes a cylindrical straight part, and that when the expansion part expands to contact the tapered surface of the prepared hole, a part of the engagement groove makes close contact with a part of the straight part. At the same time, as claimed in claim 14, it is desirable that the prepared hole is formed with a straight hole part having a diameter smaller than that of a prepared hole general part, the straight hole part being continuously formed with a bottom of the tapered hole part having a diameter expanded in a taper way, and that the unexpanded expansion part contacts the bottom of the tapered hole part prior to expansion of the expansion part, whereas the distal end of the plug contacts a bottom of the straight hole part upon completion of the construction.

Consequently, even when an external force in the disengagement direction works on the plug, for example, to cause slight relative displacement of the plug and the sleeve in the axial direction, sufficient countermeasures can be taken against the at least expanded expansion part which makes press contact with the tapered surface being going to return to the diameter decreasing direction, as long as the straight part of the annular projecting part makes close contact with a part of the engagement groove. This provides a further enhancement in pulling resistance.

The invention as claimed in claim 15 is made on the premise of claim 14, and is characterized in that the expansion part has an expanding claw and an auxiliary expanding claw on the root side of the expanding claw, and that, in parallel with the expanding claw part making press contact with the tapered surface of the tapered hole part, the auxiliary expanding claw is plastically deformed and engaged in an inner peripheral surface of the prepared hole general part upon completion of the construction.

Therefore, according to the invention as claimed in claim 15, in addition to an anchor effect due to press contact of the expanding claw with the tapered surface of the tapered hole part, another anchor effect is exerted by engaging the auxiliary expanding claw with the inner peripheral surface of the prepared hole general part. This leads to a further enhancement in pulling resistance.

In this case, it is more advantageous, in terms of preventing the expanded expansion part making press contact with the tapered surface from returning to the diameter decreasing direction, if it is set, as claimed in claim 16, such that the construction is completed with a distal end surface of the expansion part makes press contact with the bottom of the tapered hole part, or if it is set, as claimed in claim 17, such that, during a period from when the unexpanded expansion part sequentially expands and contacts the bottom of the tapered hole part to completion of the construction, the distal end surface of the expansion part makes always press contact with the bottom of the tapered hole part.

Thus, according to the invention as claimed in claims 16 and 17, the expanded expansion part making press contact with the tapered surface can be more surely prevented from returning to the diameter decreasing direction, providing a further advantage in terms of enhancement in pulling resistance.

Here, the undercut-type prepared hole required for constructing the post-construction anchor as claimed in any one of claims 1 to 17 can be drilled easily by using a drill bit as claimed in claim 18 or 19.

More specifically, according to the invention as claimed in claims 18 and 19, in the process of drilling the prepared hole, the straight hole part having smaller diameter is first drilled, and then the prepared hole general part is drilled in such a way as to expand the diameter of the straight hole part. And when the depth of the prepared hole reaches a predetermined depth, a part of the prepared hole general part is expanded in diameter in a taper way to achieve the undercut shape, thereby forming the tapered hole part. Thus, the tapered hole part, which is most important in view of the function, can be worked precisely and accurately. More specifically, as for the cutter body of the drill bit, with parts other than the undercutting cutter blade or large-diameter blade part guided by the prepared hole general part and the straight hole part, the undercutting cutter blade is gradually expanded in diameter to thereby work the tapered hole part. Thus, the tapered hole part can be accurately worked to be concentric with the prepared hole general part and the straight hole part without any occurrence of shake and the like of the undercutting cutter blade.

### Brief Description of the Drawings

Fig. 1 is a diagram illustrating a first embodiment of the post-construction anchor according to the invention, wherein (A) is a front view depicting an anchor alone, and (B) is a bottom view of Fig. 1(A);
Fig. 2 is an exploded diagram illustrating the anchor shown in Fig. 1;
Fig. 3 is a half section illustrating the anchor shown in Fig. 1(A);
Fig. 4 is a cross-sectional illustration that combines the states of the anchor shown in Fig. 1 before and after its expansion part is expanded;
Fig. 5 is cross-sectional illustrations depicting the construction procedures of the anchor shown in Fig. 1 step by step;
Fig. 6 is cross-sectional illustrations depicting the construction procedures of the anchor shown in Fig. 1 step by step;
Fig. 7 is cross-sectional illustrations depicting the construction procedures of the anchor shown in Fig. 1 step by step;
Fig. 8 is a full cross section illustrating the same state as that in Fig. 7(B);
Fig. 9 is a cross section illustrating a second embodiment of the post-construction anchor according to the invention;
Fig. 10 is a cross section illustrating the expanded anchor shown in Fig. 9;
Fig. 11 is a front view illustrating a third embodiment of the post-construction anchor according to the invention;
Fig. 12 is an exploded diagram illustrating the anchor shown in Fig. 11;
Fig. 13 is a cross section illustrating the anchor shown in Fig. 11 in the state of completion of the construction;
Fig. 14 is an exploded diagram illustrating a fourth embodiment of the post-construction anchor according to the invention;
Fig. 15 is a cross section illustrating the anchor shown in Fig. 14 in the state of completion of the construction;
Fig. 16 is a half section illustrating a fifth embodiment of the post-construction anchor according to the invention;
Fig. 17 is a diagram illustrating a sixth embodiment of the post-construction anchor according to the invention, wherein (A) is a plan view, and (B) is a half section thereof;
Fig. 18 is a diagram illustrating a seventh embodiment of the post-construction anchor according to the invention, wherein (A) is a front view, and (B) is a bottom view thereof;
Fig. 19 is a cross-sectional illustration depicting the post-construction anchor shown in Fig. 18;
Fig. 20 is a cross-sectional illustration that combines the states of the anchor shown in Fig. 18 before and after its expansion part is expanded;
Fig. 21 is an enlarged view illustrating the essential part of Fig. 20;
Fig. 22 is a cross-sectional illustration depicting the essential part, showing the process from the right half to the left half of Fig. 20 step by step;
Fig. 23 is a front view illustrating an eighth embodiment of the post-construction anchor according to the invention;
Fig. 24 is an exploded diagram illustrating the anchor shown in Fig. 23;
Fig. 25 is a front view illustrating the essential part of a ninth embodiment of the post-construction anchor according to the invention;
Fig. 26 is a front view illustrating a tenth embodiment of the post-construction anchor according to the invention;
Fig. 27 is an exploded diagram illustrating the anchor shown in Fig. 26;
Fig. 28 is a diagram illustrating an eleventh embodiment of the post-construction anchor according to the invention, wherein (A) is a front view illustrating an anchor alone, and (B) is a bottom view of Fig. 28(A);
Fig. 29 is an exploded diagram illustrating the anchor shown in Fig. 28;
Fig. 30 is a cross section illustrating the anchor shown in Figs. 28 and 29 that has been inserted into a prepared hole and a sleeve is unexpanded;
Fig. 31 is a cross section illustrating the state that the sleeve is expanded from the state in Fig. 30 and the construction is completed;
Fig. 32 is a cross section illustrating the essential part, showing the process from the state in Fig. 30 to the state in Fig. 31 step by step;
Fig. 33 is an enlarged view illustrating the essential part of Fig. 31;
Fig. 34 is a front view illustrating a twelfth embodiment of the post-construction anchor according to the invention;
Fig. 35 is an exploded diagram illustrating the anchor shown in Fig. 34;
Fig. 36 is a cross section illustrating the anchor shown in Figs. 34 and 35 in the state of completion of the construction;
Fig. 37 is a front view illustrating a thirteenth embodiment of the post-construction anchor according to the invention;
Fig. 38 is a diagram illustrating a fourteenth embodiment of the post-construction anchor according to the invention, wherein (A) is a plan view thereof, and (B) is an exploded diagram thereof;
Fig. 39 is a diagram illustrating the details of a drill bit for drilling an undercut-type prepared hole before constructing the anchor of each of the embodiments, wherein (A) is a cross section illustrating the essential part, and (B) is a cross section along line a-a in Fig. 39(A);
Fig. 40 is a cross section illustrating the state that the prepared hole is drilled by the drill bit shown in Fig. 39; and
Fig. 41 is an illustration that combines the states of an undercutting cutter blade shown in Figs. 39 and 40 before and after expanded.

### Best Mode for Carrying out the Invention

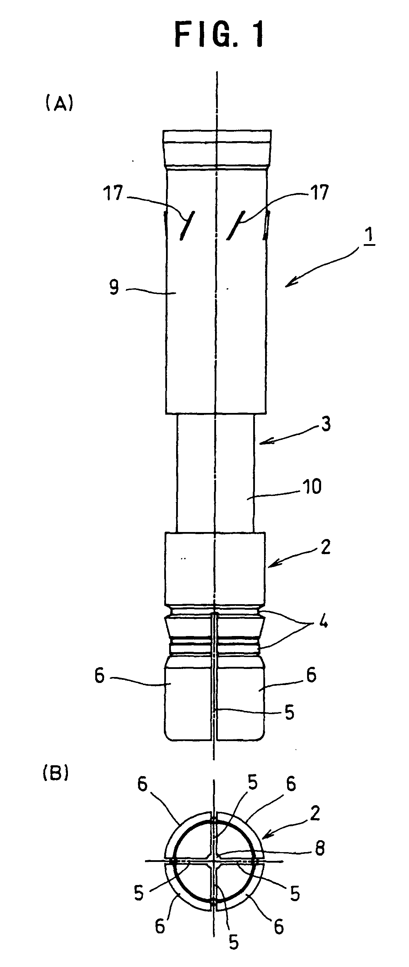

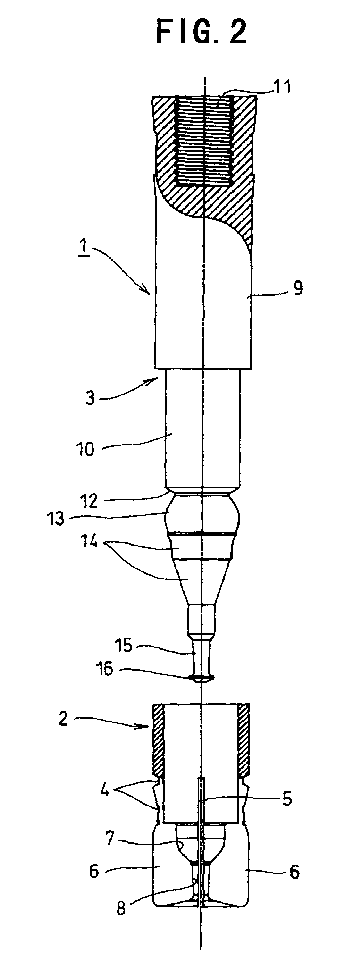

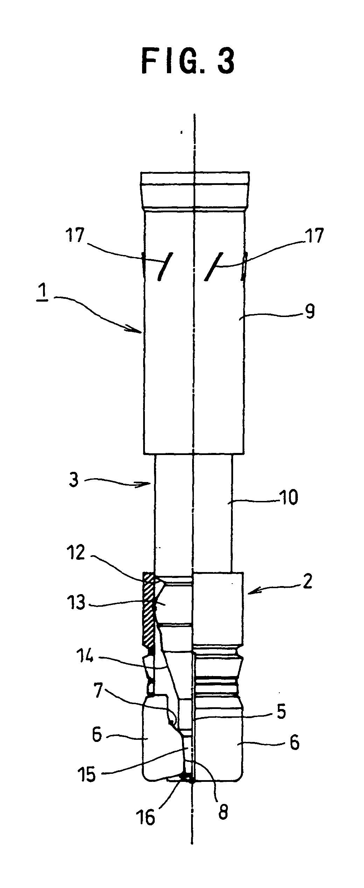

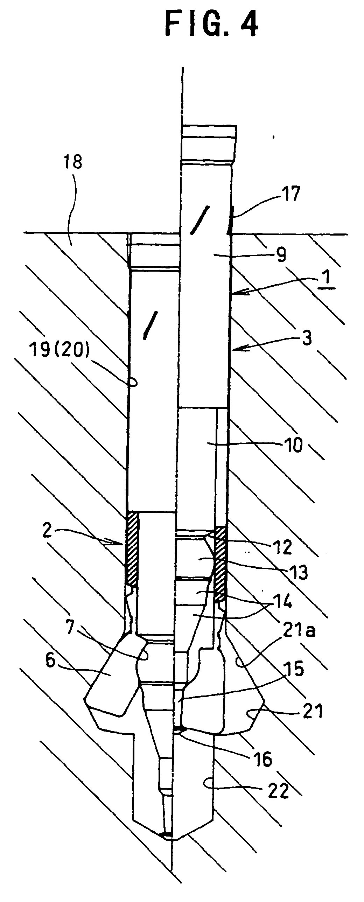

Figs. 1 to 4 are diagrams illustrating a first preferred embodiment of the post-construction anchor according to the invention (hereinafter, it is simply called an anchor). Particularly, Figs. 1(A) and (B) depict a front view and a bottom view of the anchor, and Fig. 2 depicts an exploded cross section. Fig. 3 depicts a half section of Fig. 1(A), and Fig. 4 depicts a cross section that combines the states of a sleeve before and after expanded. In addition, the first embodiment corresponds to the invention as claimed in claims 1 to 7.

As shown in Figs. 1 and 2, an anchor 1 is formed of a hollow cylindrical sleeve 2 and a plug 3 in a roughly stepped shaft form that is press-fit as an expanding member into the sleeve 2.

A plurality of annular grooves 4 is formed on the outer surface of the sleeve 2. In addition to this, the lower half of the sleeve 2 is slit in collets by four radial slit grooves 5, and thus an expansion part 6 expandable in diameter are formed. Then, on the inner surface of the expansion part 6, a engagement groove 7 in an arc shape in cross section is formed annularly as the inner diameter thereof is gradually narrowed downward, and a hole part 8 having an ultrasmall diameter is opened in the lower part from the engagement groove 7.

On the other hand, the plug 3 is designed to have the total length that is a few times the length of the sleeve 2 including a large-diameter shaft part 9 and a small-diameter shaft part 10 downward, in which a female thread part 11 is formed in the upper end part. In the lower half of the small-diameter shaft part 10, an annular projecting part 13 in a rough sphere that continues to a general part of the small-diameter shaft part 10 through a neck part 12 locally constricted, and a tapered surface 14 smoothly continuing thereto are formed. Thus, it is designed that the diameter thereof is gradually reduced downward. More specifically, the curvature of the annular projecting part 13 is designed to the size matching with the engagement groove 7 of the sleeve 2, and the maximum diameter of the annular projecting part 13 is formed to have the same dimensions as those of the general part of the small-diameter shaft part 10. The diameter is gradually reduced from the annular projecting part 13 toward a distal end shaft part 15 having the ultrasmall diameter, and finally it is converged in the diameter of the distal end shaft part 15. At the most distal end of the distal end shaft part 15, a flange part 16 having a larger diameter than this is formed.

Then, when the plug 3 is press-fit into the sleeve 2 for combining the sleeve 2 with the plug 3, as shown in Fig. 3, the inner surface of the general part of the sleeve 2 is simply pressed against the top part of the annular projecting part 13 of the plug 3. In addition to this, the flange part 16 at the most distal end of the plug 3 passes over the hole part 8 of the sleeve 2, and is locked at the opening edge of the hole part 8. Consequently, the distal end shaft part 15 of the plug 3 and the hole part 8 of the sleeve 2 are engaged with each other in a concavo-convex way, and the effect of preventing the disengagement is exerted by relative positioning. Therefore, as shown in the same drawing, the sleeve 2 and the plug 3 are not separated from each other in the anchor 1 alone before construction. At the same time, the outer diameter of the large-diameter shaft part 9 of the plug 3 and the outer diameter of the unexpanded sleeve 2 are designed to have the same dimensions beforehand. Moreover, a plurality of ultrasmall diagonal ribs 17 is formed on the outer surface of the large-diameter shaft part 9 of the plug 3.

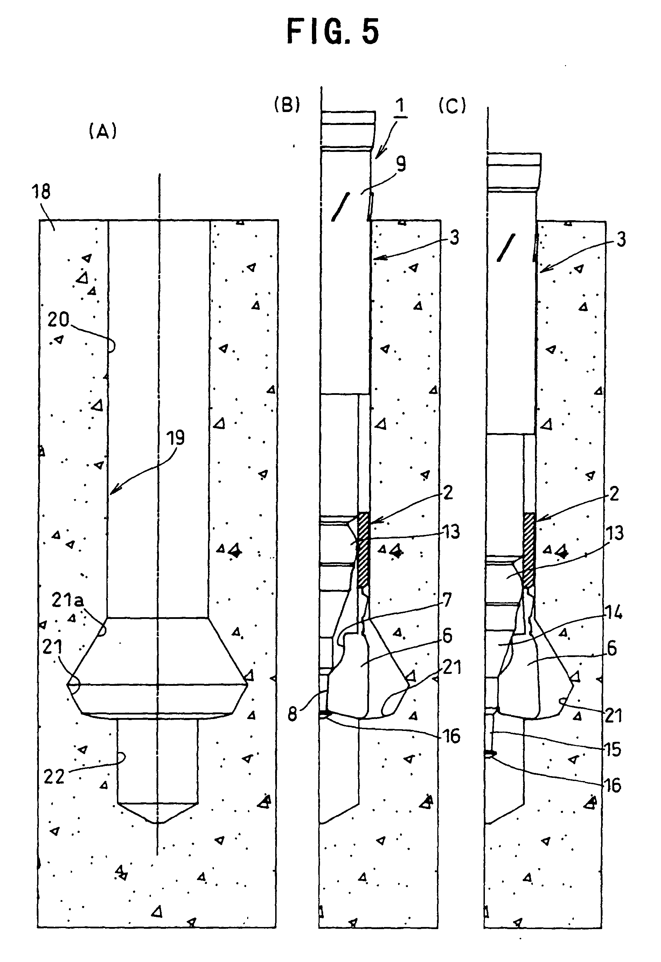

Next, the construction procedures of the anchor 1 will be described with reference to Figs. 5 to 8 in addition to Fig. 4; an example is given that an undercut-type prepared hole 19 is combined.

First, as shown in Fig. 5(A), the undercut-type prepared hole 19 is drilled in a concrete structure 18 to be the construction object with a drill and the like. This prepared hole 19 is formed in a taper shape in which it is expanded in a skirt shape toward the deep side near the hole bottom of the prepared hole general part 20 to form a tapered hole part 21, and a straight hole part 22 is continuously formed from the hole bottom of the tapered hole part 21. The diameter of the straight hole part 22 is formed smaller than that of the prepared hole general part 20. In addition, the prepared hole 19 in a special form is drilled by a drill bit for exclusive use, which will be described later.

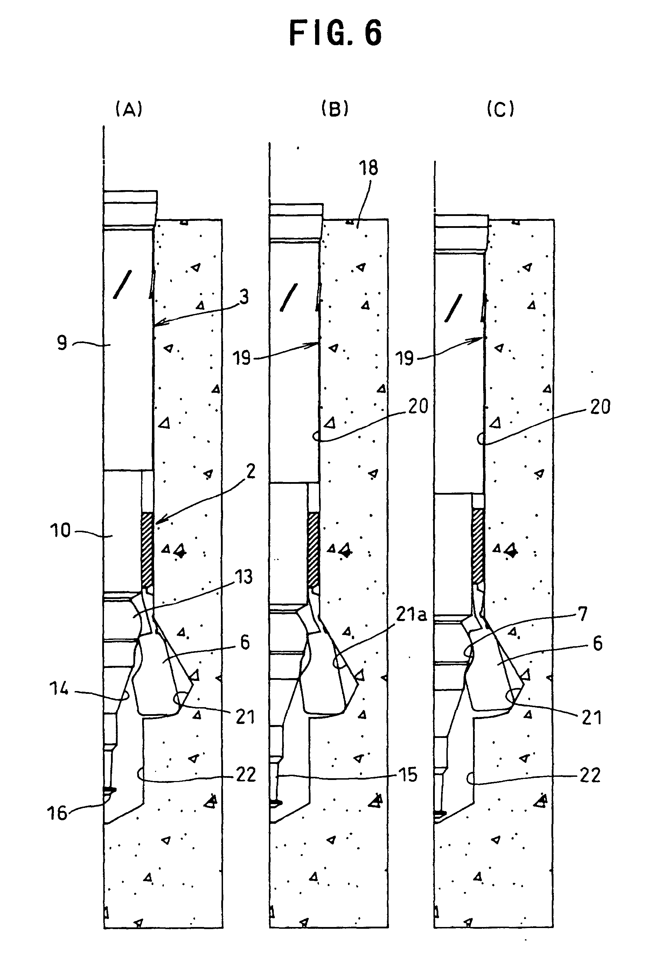

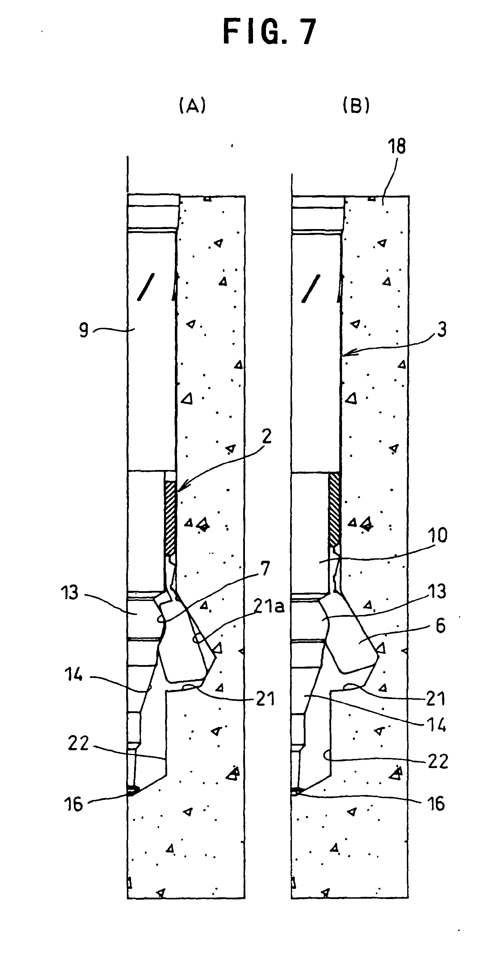

Subsequently, as shown in Fig. 5(B), the anchor 1 is inserted into the prepared hole 19, the distal end surface of the sleeve 2, that is, the distal end surface of the expansion part 6 is allowed to reach the hole bottom of the tapered hole part 21. Then, with the use of a given jig or with no jig, the head of the plug 3 is directly hit with a hammer, and is hammered until the upper end surface of the large-diameter shaft part 9 is flush with the concrete structure 18 (refer to Figs. 6 and 7).

In the process of hammering the plug 3, as shown in Figs. 5(B) and (C), the concavo-convex engagement of the distal end shaft part 15 of the plug 3 described before to the hole part 8 of the sleeve 3 is gradually released as well as the tapered surface 14 of the plug 3 is relatively displaced with respect to the expansion part 6 of the sleeve 2. Accordingly, the expansion part 6 is expanded in diameter toward the outside in a skirt shape so as to follow a tapered surface 21a of the tapered hole part 21. Then, the annular projecting part 13 of the plug 3 is soon engaged into the engagement groove 7 of the sleeve 2 in a concavo-convex way, and the sleeve 2 is relatively positioned with respect to the plug 3. Therefore, the hammering of the plug 3 and the expansion of the expansion part 6 are finally completed in a state that the expansion part 6 is pressed against the tapered surface 21a of the tapered hole part 21.

More specifically, as shown in Fig. 7(B), the total length of the plug 3 and the depth of the prepared hole 19 are designed beforehand so that the flange part 16 at the distal end of the plug 3 just reaches the hole bottom of the straight hole part 22 of the prepared hole 19 when the upper end surface of the plug 3 is flush with the counterpart concrete structure 18. Thus, builders can visually confirm the state that the upper end surface of the plug 3 is flush with the concrete structure 18, and recognize the time to finish hammering by a change in impact sound accompanied by the plug reaching the bottom. In addition to this, they can momentarily really know the event that the annular projecting part 13 of the plug 3 is engaged into the engagement groove 7 of the sleeve 2 in a concavo-convex way as a tactile feel, they consider that the generation of this tactile feel tells the expansion part 6 having been expanded by a predetermined amount, and then they finish hammering the plug 3.

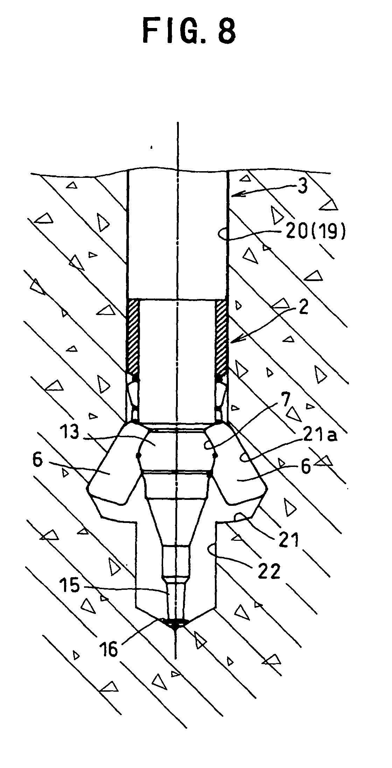

As shown in Fig. 8, in the state that the expansion part 6 is routinely expanded from the root part thereof, they themselves try to return in the closing direction due to springback. However, in addition to the annular projecting part 13 of the plug 3 being engaged into the engagement groove 7 of the sleeve 2 in a concavo-convex way, the reaction force from the tapered surface 21a of the tapered hole part 21 works on the expansion part 6 as well as the reaction force that is generated in association with the plug 3 reaching the hole bottom of the straight hole part 22 works so as to push back the entire plug 3 upward at the same time. Consequently, as shown in Figs. 7(B) and 8, the expansion part 6 is pressed against the tapered surface 21a, and self-maintain this state.

More specifically, in the state of completion of the construction, the reaction force of the hole bottom that is generated in association with the plug 3 reaching the hole bottom of the prepared hole 19 pushes back the plug 3 itself in the direction opposed to the hammering direction. Consequently, the reaction force of the hole bottom works as a force in the direction of further expanding the expansion part 6 in the part of the concavo-convex engagement. This is nothing more or less than the expansion part being pressed against the tapered surface 21 a of the prepared hole 19 all the time, and thus the state of completion of the construction is self-maintained. These events are not generated that the pressed state becomes insufficient or a clearance is produced. Therefore, the anchor 1 alone can obtain the pulling resistance equal to the tensile strength of the steel product and the like at the same time as the construction is completed without relying on the pulling force and the like.

As described above, according to the embodiment, the plug 3 is simply press-fit into the sleeve 2 and both are also engaged with each other in a concavo-convex way for relative positioning in the anchor 1 alone before construction. Therefore, the sleeve 2 is not separated from the plug 3 with significantly excellent handling-ability, a tactile feel can be obtained because of the concavo-convex engagement when the plug 3 is hammered to the defined position to expand the expansion part 6. In addition to this, it can be visually confirmed that the upper end surface of the plug 3 is flush with the concrete structure 18, and the state can be confirmed by a change in impact sound. Thus, variations caused by differences in individual builders are hard to be generated in the constructed state, and the stable anchor effect can be obtained all the time. Furthermore, with the combination of the undercut-type prepared hole 19, the anchor 1 alone can obtain the pulling resistance equal to the tensile strength of the steel product and the like at the same time as the construction is completed without relying on the pulling force and the like, and the pulling resistance thereof is further enhanced.

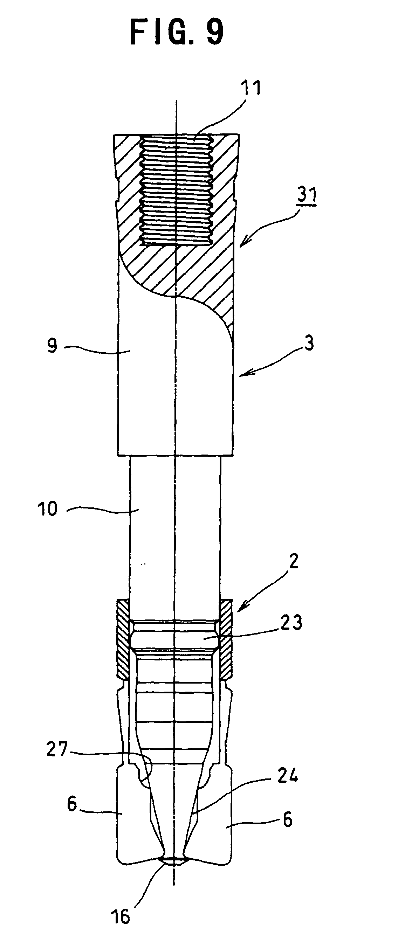

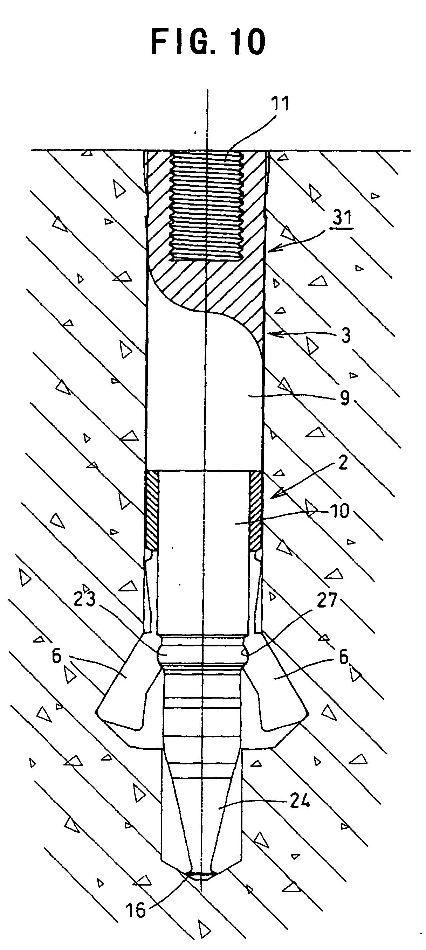

Figs. 9 and 10 depict a second embodiment of the anchor according to the invention; the parts common to those in the first embodiment are assigned the same reference numerals and signs. In addition, the second embodiment corresponds to the invention as claimed in claims 1 to 3 and 5 to 7.

An anchor 31 of the second embodiment is different from that of the first embodiment in that the shapes of an engagement groove 27 of a sleeve 2 and an annular projecting part 23 of a plug 3 are reduced, which are to be engaged with each other in a concavo-convex way by expanded expansion part 6, and a tapered surface 24 is formed at the distal end further from the plug 3. Furthermore, since the structure other than the description above is basically the same as that of the first embodiment, completely the same advantages as those of the first embodiment can be obtained in the second embodiment.

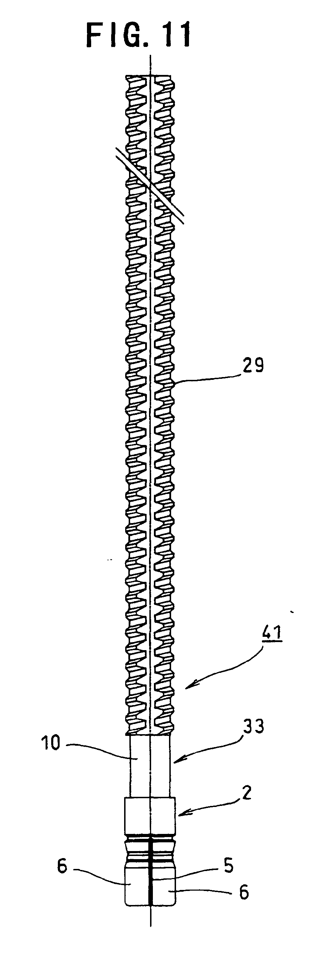

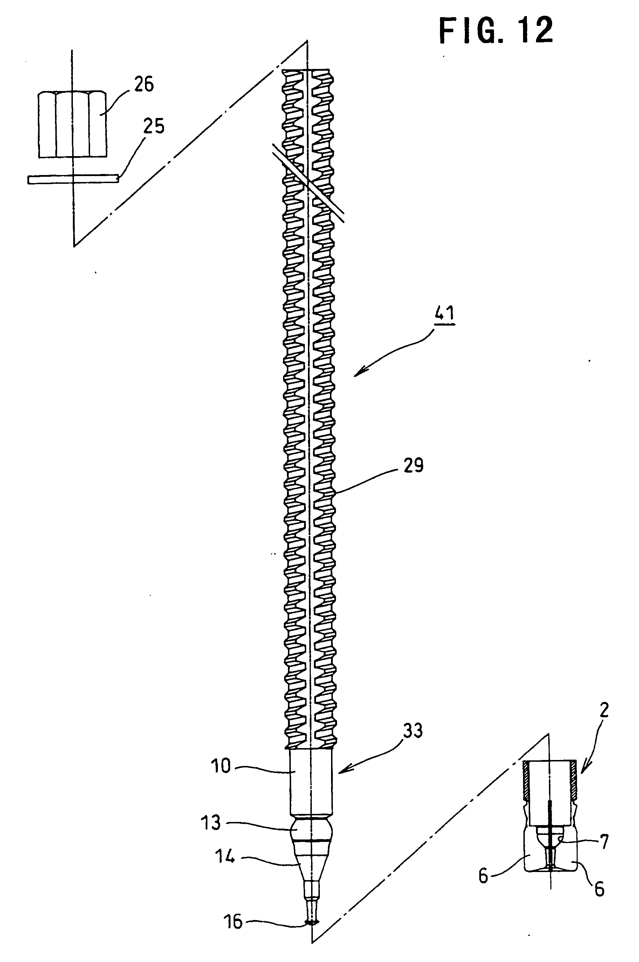

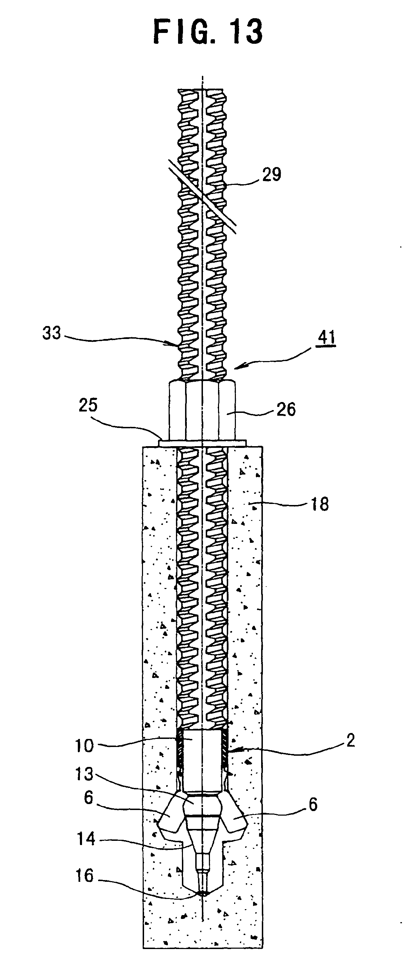

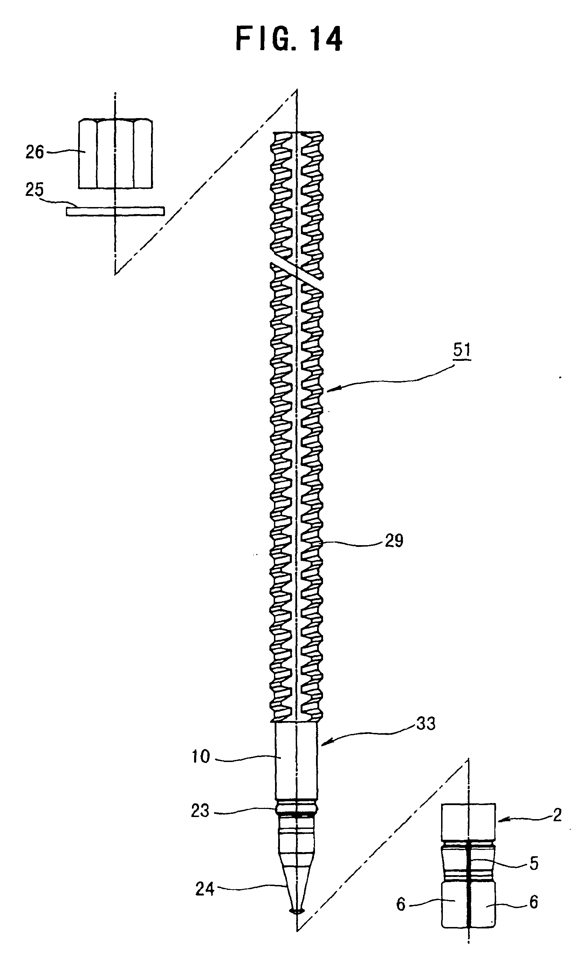

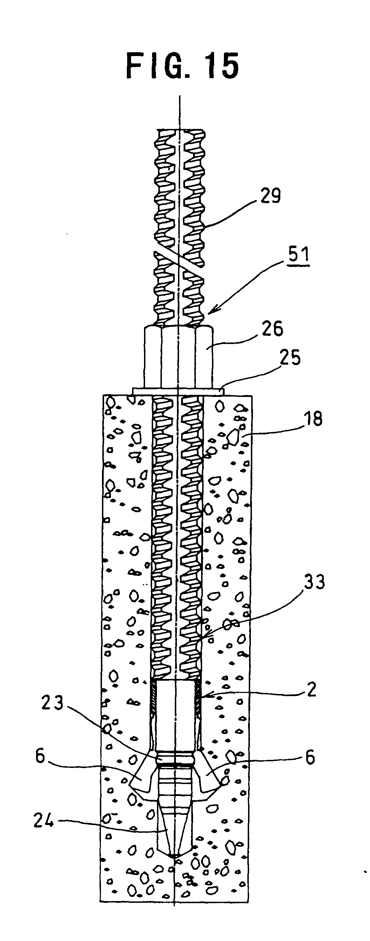

Figs. 11 to 13, 14 and 15 depict third and fourth embodiments of the anchor according to the invention. Fig. 11 depicts a front view, Figs. 12 and 14 depict exploded diagrams, and Figs. 13 and 15 depict cross sections after a sleeve 2 is expanded. The parts common to those in the first and second embodiments are assigned the same reference numerals and signs. In addition, the third embodiment corresponds to the invention as claimed in claims 1 to 6 and 8, and the fourth embodiment corresponds to the invention as claimed in claims 1 to 3, 5, 6 and 8.

In the third embodiment shown in Figs. 11 to 13, it is different from the first embodiment in that a large-diameter shaft part of a plug 33 in an anchor 41 is formed of a long deformed bar for reinforced concrete (deformed steel bar with threads) 29. The deformed bar 29 for reinforced concrete also serves as a male thread on which a nut 26 is screwed together through a washer 25.

Similarly, in the fourth embodiment shown in Figs. 14 and 15, it is different from the second embodiment shown in Figs. 9 and 10 in that a large-diameter shaft part of a plug 33 in an anchor 51 is formed of a long deformed bar for reinforced concrete (deformed steel bar with threads) 29. The deformed bar 29 for reinforced concrete also serves as a male thread on which a nut 26 is screwed together through a washer 25.

In the construction of the anchors 41 and 51 of the third and fourth embodiments, the expansion part 6 is expanded by completely the same procedures as those in the first embodiment, and then the nut 26 is tightened with a torque wrench to a defined torque. When this is done, there is an advantage that more accurately controls or ensures the pulling resistance (strength) for the anchors 41 and 51 by the tightened torque value. In this case, an adhesive can be combined as well. Any of the anchors can be used as a joint bar for earthquake-resistant reinforcement of concrete structures, for example.

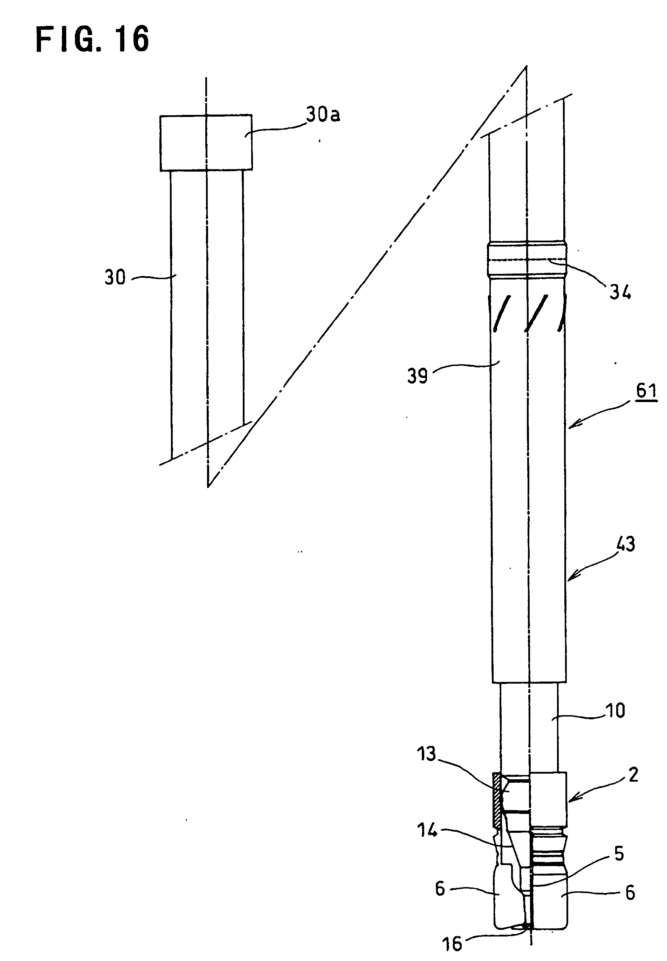

Fig. 16 depicts a fifth embodiment of the anchor according to the invention; the parts common to those in the first embodiment are assigned the same reference numerals and signs. In addition, the fifth embodiment corresponds to the invention as claimed in claims 1 to 7.

As shown in Fig. 16, in an anchor 61 of the fifth embodiment, an extension rod 30 is extended and formed integrally on the upper side of a large-diameter shaft part 39 in a plug 43. As similar to Fig. 2, a female thread part for joining a given counterpart structure is formed in a head 30a of the extension rod 30, and a marking 34 for an indicator in hammering is formed on the border between the large-diameter shaft part 39 and the extension rod 30. Therefore, it is fine to hammer until the marking 34 is flush with a concrete structure 18. Also in the fifth embodiment, completely the same advantages as those of the first embodiment can be obtained.

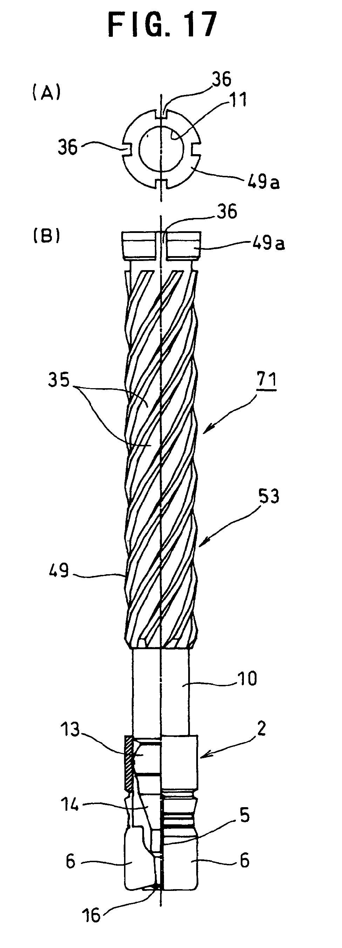

Fig. 17 depicts a sixth embodiment of the anchor according to the invention; the parts common to those in the first embodiment are assigned the same reference numerals and signs. In addition, the sixth embodiment corresponds to the invention as claimed in claims 1 to 7 and 9.

An anchor 71 is configured to intend to positively combine an adhesive in its construction. As shown in Fig. 17, helical grooves 35 in a thread groove form are formed on the outer surface of a large-diameter shaft part 49 in a plug 53, and notch grooves 36 are formed on a head 49a so as to communicate with the space between the helical grooves 35.

Thus, when construction is conducted as an adhesive is combined, the holding property of the adhesive is excellent because of the helical grooves 35, and air in an adhesive layer can be removed easily from the notch grooves 36 in construction. Therefore, the anchor effect due to the adhesive is also exerted surely.

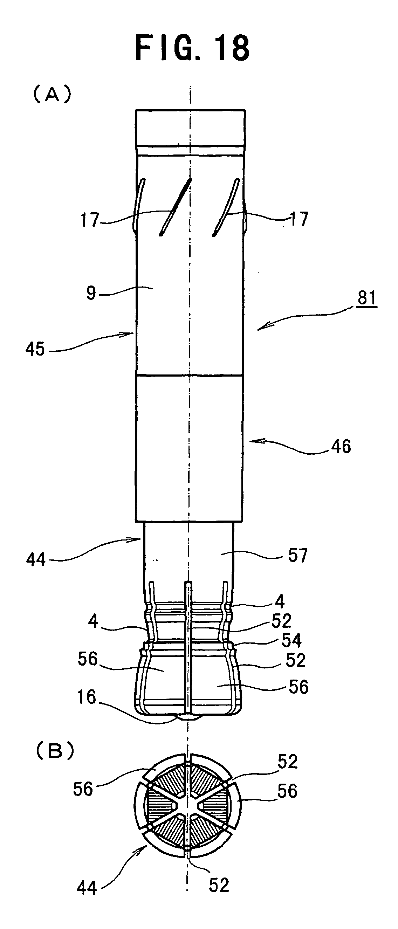

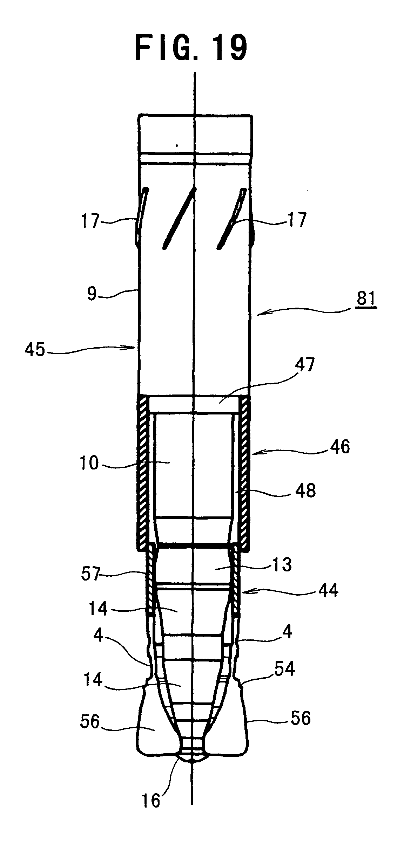

Figs. 18 and 19 depict a seventh embodiment of the anchor according to the invention; the parts common to those in the first embodiment shown in Figs. 1 to 4 are designated the same reference numerals and signs. In addition, the seventh embodiment corresponds to the invention as claimed in claims 1 to 3, 5, 7, and 10 to 12.

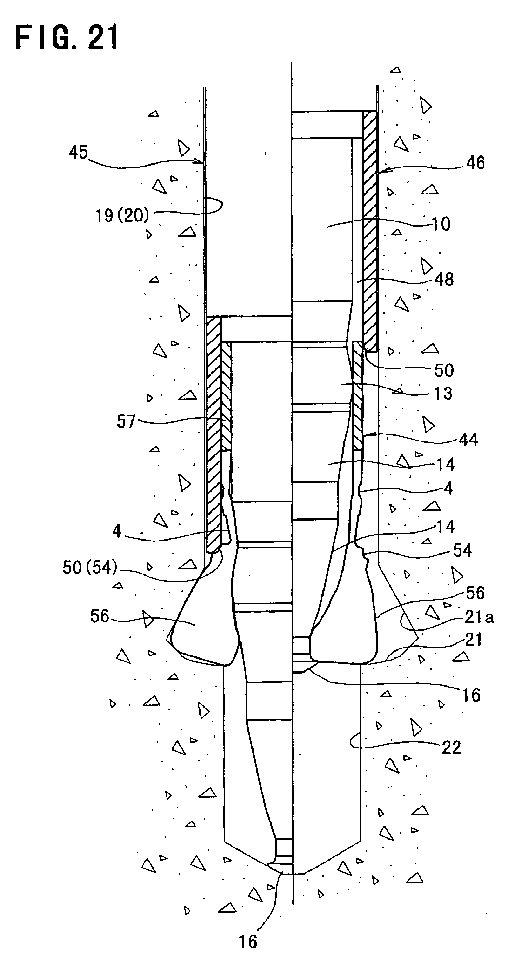

As shown in Figs. 18 and 19, an anchor 81 of this embodiment is different from that of the first embodiment in that it has a restraint ring 46 having the same outer diameter as that of a large-diameter shaft part 9 in addition to a sleeve 44 and a plug 45. In plug 45, a middle step part 47 is formed between the large-diameter shaft part 9 and a small-diameter shaft part 10, and the restraint ring 46 in a simple hollow cylindrical shape is press-fit and fixed to the middle step part 47. It is of course acceptable that the restraint ring 46 is inserted into the middle step part 47 and then fixed and welded at a few dots. Then, the provision of the restraint ring 46 ensures a given clearance 48 between the restraint ring 46 and the small-diameter shaft part 10, and a beveled part 50 is formed on the inner surface at the distal end of the restraint ring 46 as shown in Fig. 21 of an enlarged diagram.

In the sleeve 44, the lower half thereof is slit into collets by six radial slit grooves 52 to form an expansion part 56 expandable in diameter, and a thin general part 57 is formed, which has a thickness insertable into the clearance 48 between the restraint ring 46 and the small-diameter shaft part 10 in the upper half other than the expansion part 56. Then, an annular groove 4 is formed on the general part 57, a groove part 54 (refer to Fig. 21) in an annular groove form similar thereto is formed on the expansion part 56 at the position facing the beveled part 50 of the restraint ring 46. The sleeve 44 is press-fit to an annular projecting part 13 of the plug 45 so as to slightly enter the inside of the restraint ring 46, and is engaged with a flange part 16 at the distal end of the plug 45 for preventing disengagement. Furthermore, as apparent from Fig. 18(B), a knurled rough surface is formed on the distal end surface of the expansion part 56 beforehand.

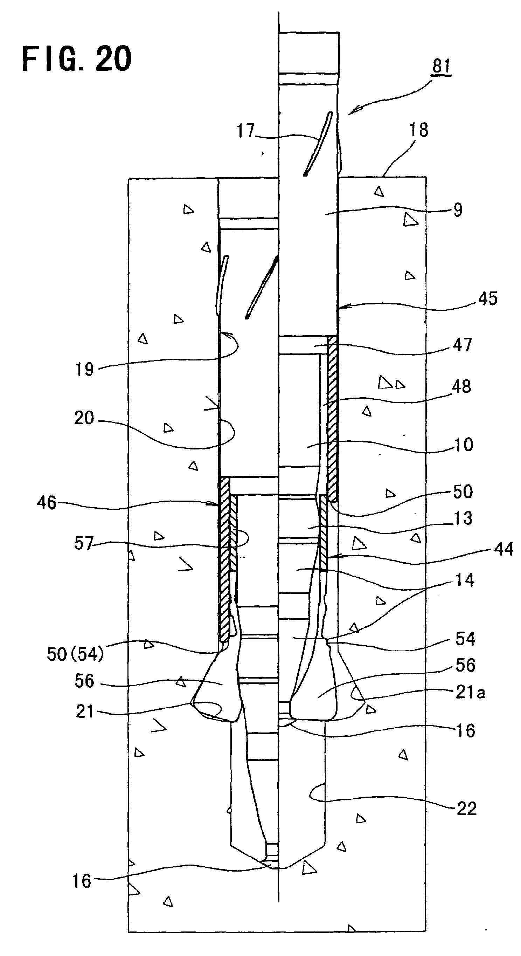

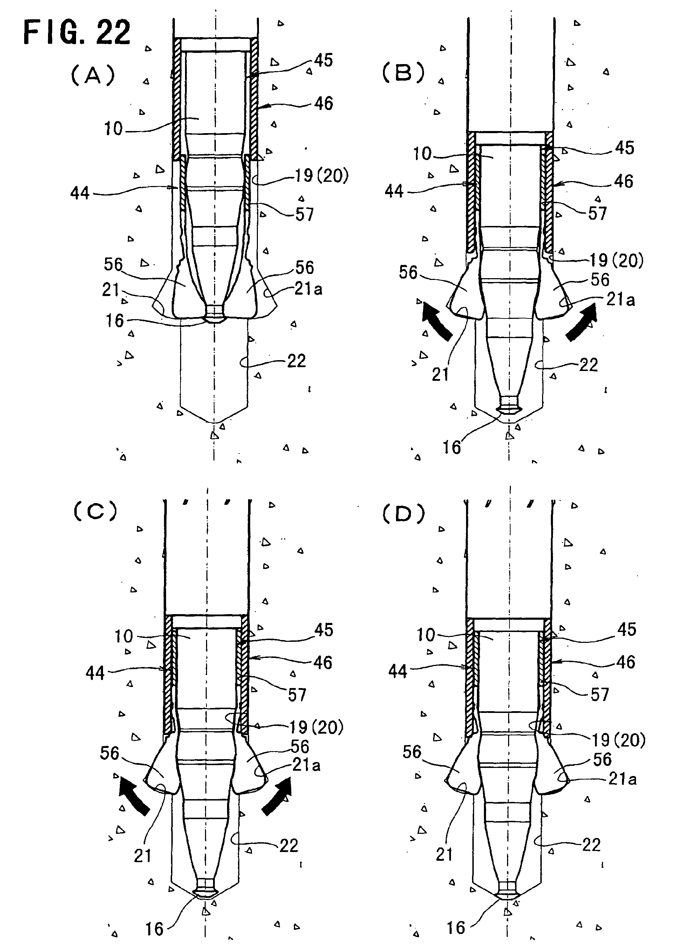

Therefore, according to the anchor 81 of the seventh embodiment, as shown in Figs. 20 and 21, the behavior of hammering work in the prepared hole 19 is basically the same as that of the first embodiment. More specifically, as shown in Fig. 22(A) in addition to Figs. 20 and 21, when the plug 45 is hammered in a state that the expansion part 56 of the sleeve 44 reaches the bottom of a tapered hole part 21, the expansion part 56 is gradually expanded outside and closely contacted with a tapered surface 21a of the tapered hole part 21 (refer to Figs. 21(B) and (C)). Finally, as shown Fig. 21 (D), the expansion part 56 is closely contacted with the tapered surface 21a of the tapered hole 21, and then the construction is completed in a state that the distal end of the plug 45 reaches the hole bottom of a straight hole part 22.

In the expansion process, since the restraint ring 46 is fixed to the plug 45 beforehand, it is relatively displaced with respect to the sleeve 44 along with the plug 45, and the general part 57 of the sleeve 44 gradually enters the clearance 48 between the restraint ring 46 and the small-diameter shaft part 10 of the plug 45. Then, near the end of in the expansion process of the expansion part 56 and right before the distal end of the plug 45 reach the hole bottom of the straight hole part 22, the beveled part 50 at the distal end of the restraint ring 46 is engaged with and pressed against the groove part 54 on the outer surface of the expansion part 56 as shown in the left half of Fig. 21. Accordingly, the groove part 54, which is an expanded bend part of the expansion part 56, is strongly restrained by the restraint ring 46 from outside so as to stand up to the annular projecting part 13 of the plug 45 pressing and spreading the expansion part 56 from the inside of the expansion part 56. The expanded bend part is pressed and restrained by the annular projecting part 13 and the restraint ring 46 outside and inside, and then the expansion of the expansion part 56, that is, the construction as the anchor 81 is completed.

This is nothing more or less than the expanded state of the expansion part 56 being in a self-locked state that the expansion part 56 is autonomously locked by the anchor 81 itself, not by the prepared hole 19 even though the expansion part 56 is pressed against the tapered surface 21a of the prepared hole 19. The expanding operation of the expansion part 56 is stably conducted, and springback of the expansion part 56 is not allowed. Therefore, the embodiment is significantly excellent in the aspect of the working stability.

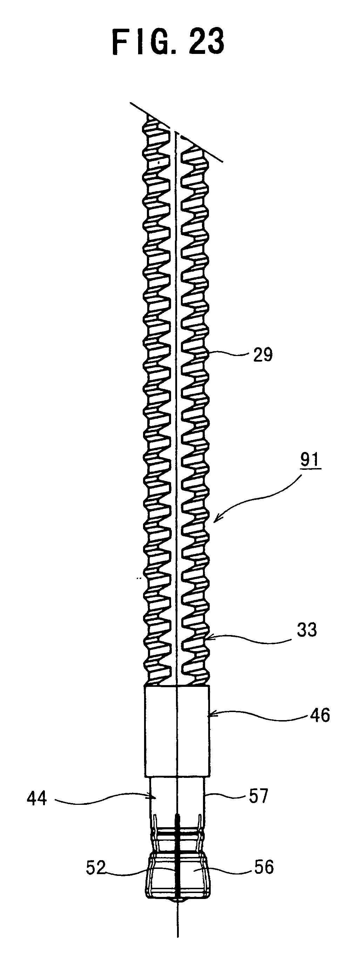

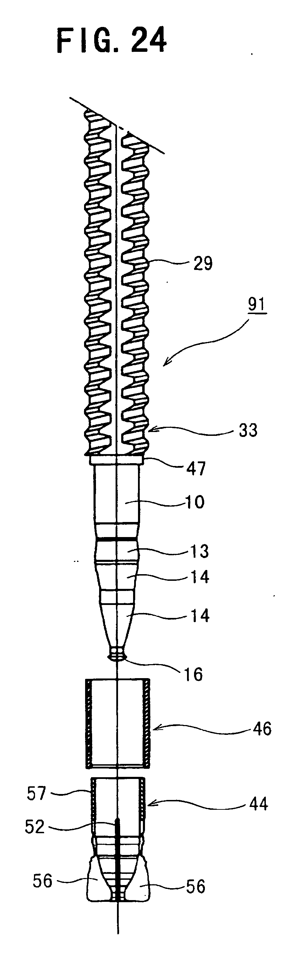

Figs. 23 and 24 depict an eighth embodiment of the anchor according to the invention; the parts common to those in the third embodiment shown in Figs. 11 to 13 and the seventh embodiment shown in Figs. 18 and 19 are assigned the same reference numerals and signs. In addition, the eighth embodiment corresponds to the invention as claimed in claims 1 to 3, 5, 7, 8 and 10 to 12.

More specifically, in the eighth embodiment shown in Figs. 23 and 24, a sleeve 44 and a restraint ring 46 the same as those shown in Figs. 18 and 19 are adapted to an anchor 91 having a large-diameter shaft part of a plug 33 formed of a deformed bar 29 for reinforced concrete.

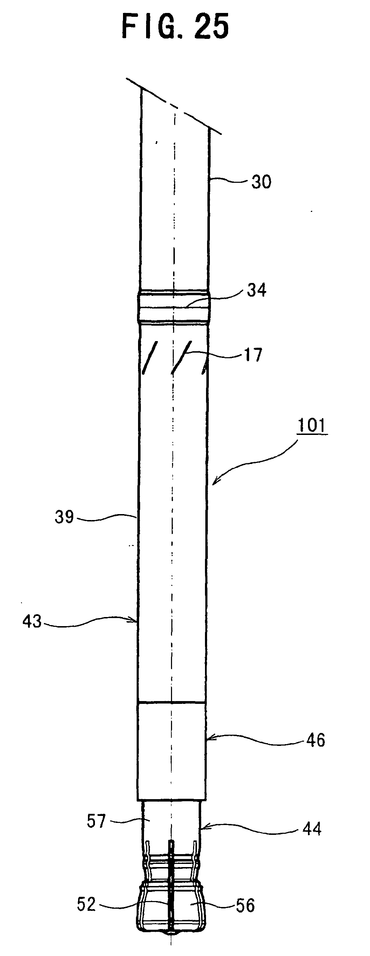

Furthermore, Fig. 25 depicts a ninth embodiment of the anchor according to the invention; the parts common to those in the fifth embodiment shown in Fig. 16 and the seventh embodiment shown in Figs. 18 and 19 are assigned the same reference numerals and signs. In addition, the ninth embodiment corresponds to the invention as claimed in claims 1 to 3, 5, 8 and 10 to 12.

More specifically, in the ninth embodiment shown in Fig. 25, a sleeve 44 and a restraint ring 46 the same as those shown in Figs. 18 and 19 are adapted to an anchor 101 in which an extension rod 30 is extended and formed from a large-diameter shaft part of a plug 43.

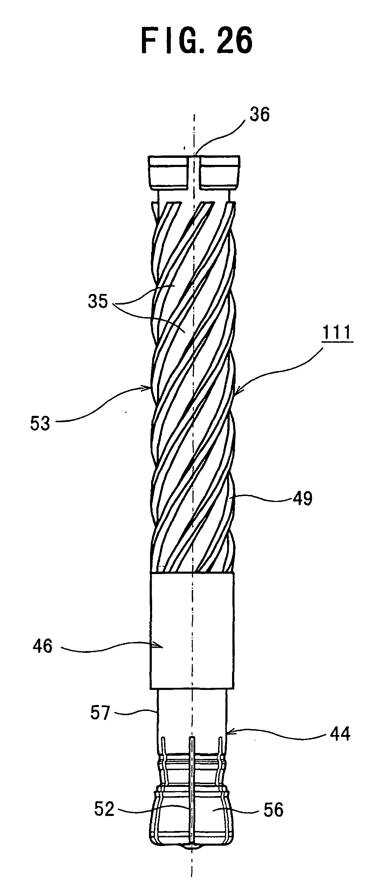

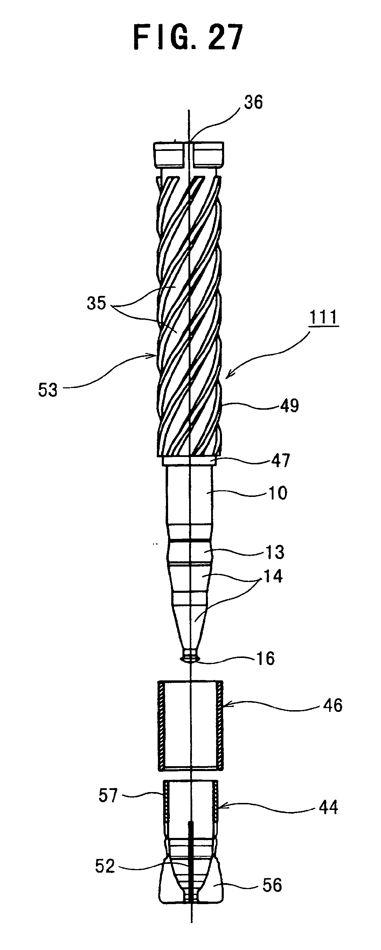

Moreover, Figs. 26 and 27 depict a tenth embodiment of the anchor according to the invention; the parts common to those in the sixth embodiment shown in Fig. 17 and the seventh embodiment shown in Figs. 18 and 19 are assigned the same reference numerals and signs. In addition, the tenth embodiment corresponds to the invention as claimed in claims 1 to 3, 5, 7, 9 and 10 to 12.

More specifically, in the tenth embodiment shown in Figs. 26 and 27, a sleeve 44 and a restraint ring 46 the same as those shown in Figs. 18 and 19 are adapted to an anchor 111 in which helical grooves 35 for holding an adhesive are formed on the outer surface of a large-diameter shaft part 49 in a plug 53.

Also in each of the eighth, ninth and tenth embodiments, the same advantages as those of the seventh embodiment can be obtained.

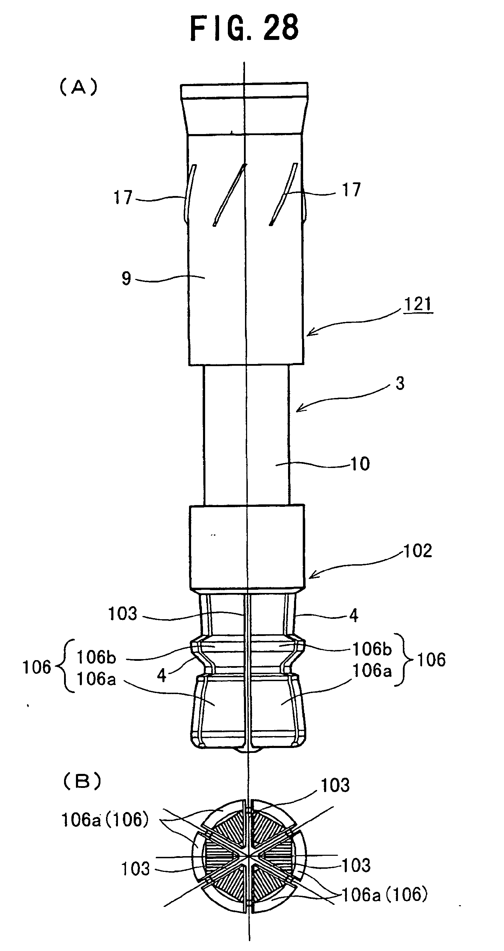

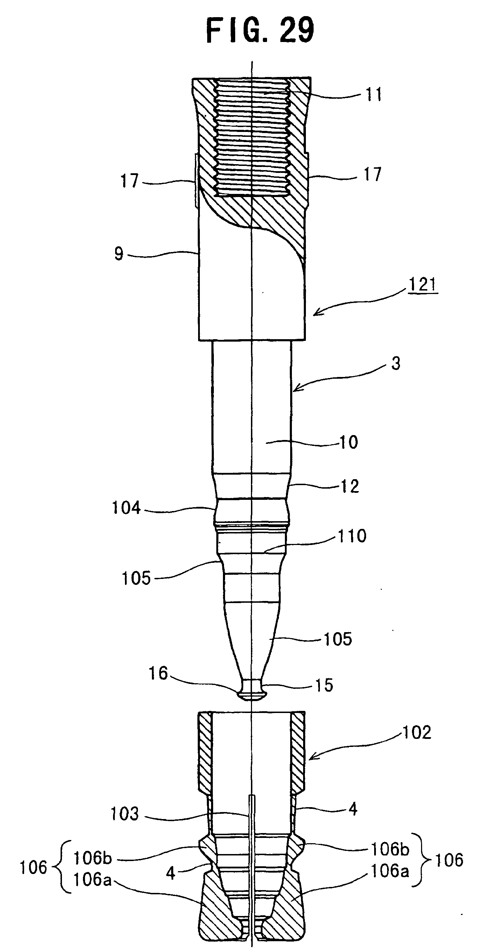

Figs. 28 and 29 depict an eleventh embodiment of the anchor according to the invention; the parts common to those in the first embodiment shown in Figs. 1 to 4 are assigned the same reference numerals and signs. In addition, the eleventh embodiment corresponds to the invention as claimed in claims 1 to 3, 5 to 7, and 13 to 17.

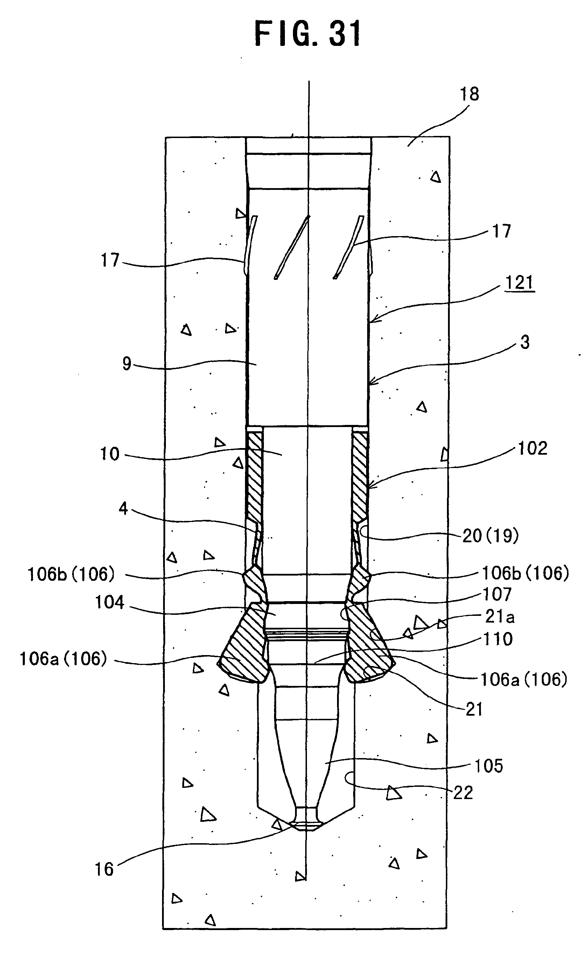

As shown in Figs. 28 and 29, the lower half of a sleeve 102 forming an anchor 121 with a plug 3 is slit into collets by six radial slit grooves 103 to form an expansion part 106 expandable in diameter. The expansion part 106 has an expanding claw part 106a at the distal end thereof and an auxiliary expanding claw part 106b integrally formed at the root part of the expanding claw part 106a. As shown in Fig. 31, when the construction is completed as the expansion part 106 is expanded, the expanding claw parts 106a are pressed against a tapered surface 21a of a tapered hole part 21 of a prepared hole 19 as well as the auxiliary expansion part 106b is plastically deformed outside and engaged in the inner surface of a prepared hole general part 20 at the same time.

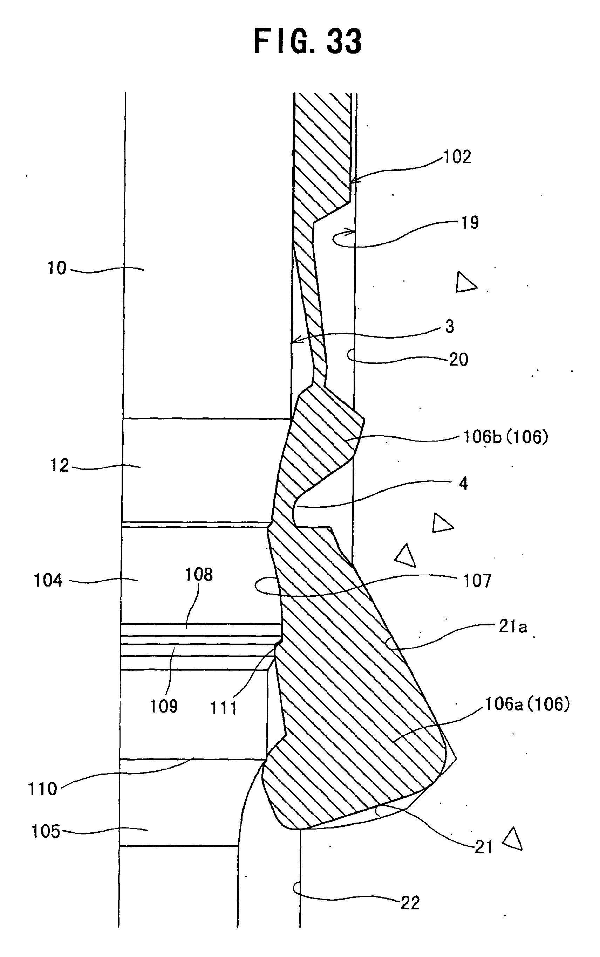

Moreover, an annular projecting part 104 and a tapered surface 105 are formed at the distal end part of a small-diameter shaft part 10 in the plug 3, and a taper-shaped engagement groove 107 is formed in the inner surface of the expansion part 106 in the sleeve 102, the engagement groove is to be engaged with the annular projecting part 104 in a concavo-convex way as the expansion part 106 is expanded. Furthermore, as shown in Fig. 33, two narrow straight parts 108 and 109 in a cylindrical shape are formed near the top part of the annular projecting part 104 so as to adjoin to the annular projecting part 104, and a ridge part 110 relatively sharp is formed on the distal end part further from the straight parts 108 and 109.

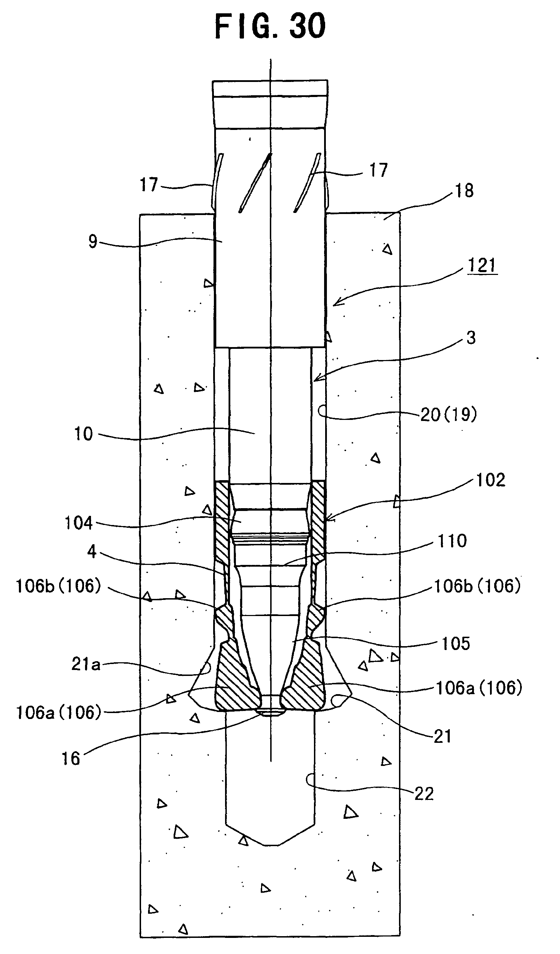

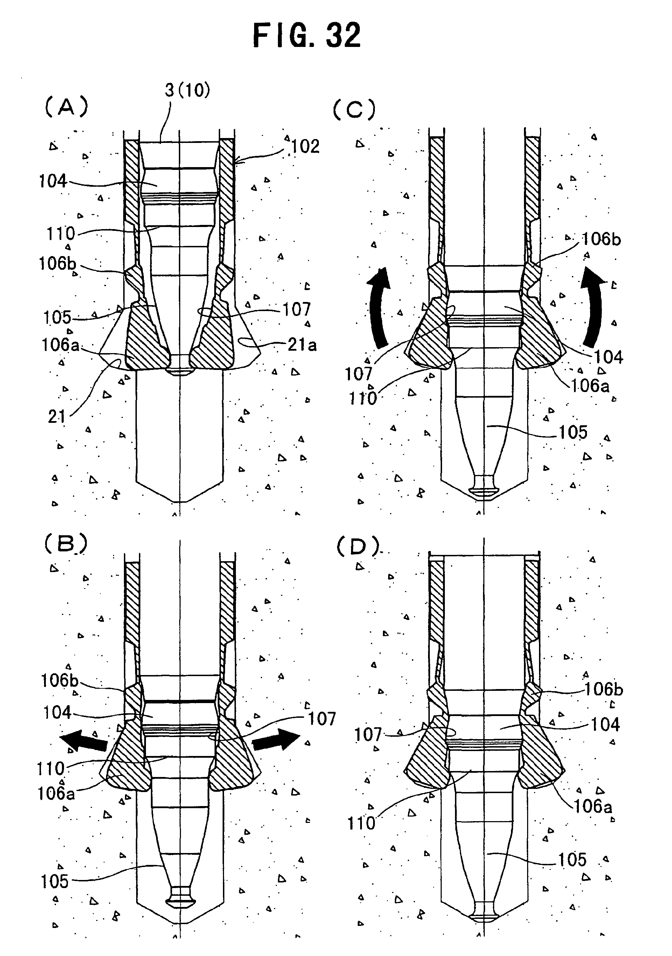

Therefore, according to the anchor 121 of the eleventh embodiment, as shown in Fig. 30, the sleeve 102 is inserted into the prepared hole general part 20 of the prepared hole 19 along with the plug 3, and the plug 3 is hammered as the distal end surface of the sleeve 102 reaches the hole bottom of the tapered hole part 21. Then, as shown in Fig. 31, the annular projecting part 104 of the plug 3 and the engagement groove 107 of the sleeve 102 are engaged with each other in a concavo-convex way, the expansion part 106 is expanded, the expanding claw parts 106a are pressed against the tapered surface 21a of the tapered hole part 21, the auxiliary expanding claw parts 106b plastically deformed are engaged in the inner surface of the prepared hole general part 20, and then the construction is completed. In addition, Figs. 32(A) to (D) depict the process from the state in Fig. 30 to the state in Fig. 31 step by step more in detail. More specifically, in addition to the anchor effect due to the expansion of each of the expanding claw parts 106a, the anchor effect due to the auxiliary expanding claw parts 106b being engaged in the prepared hole general part 20 is obtained, and thus the pulling resistance after the construction is completed is further enhanced.

In the process of expanding the expansion part 106, as shown in Fig. 32, the expansion proceeds as the distal end surfaces of the expanding claw parts 106a are always pressed against the hole bottom of the tapered hole part 21. As shown in Figs. 31 and 33, the construction is completed in the state that the distal end surfaces of the expanding claw parts 106a are pressed against the hole bottom of the tapered hole part 21 of the prepared hole 19. At the same time, as shown in Fig. 33, the ridge part 110 of the plug 3 is pressed against the inner surfaces of the expanding claw parts 106a. Therefore, because of the frictional force between the distal end surfaces of the expanding claw parts 106a and the hole bottom of the tapered hole part 21 and the frictional force between the ridge part 110 and the inner surfaces of the expanding claw parts 106a, a returning phenomenon, which is so-called springback of the expanding claw parts 106a, is suppressed in the middle of expansion or in the state of completion of the construction.

Furthermore, as apparent from Fig. 28(B), the distal end surfaces of the expanding claw parts 106a are formed with a knurled rough surface beforehand.

Moreover, as shown in Fig. 33, in the state of completion of the construction, a part of the engagement groove 107 of the expanding claw parts 106a and a projecting part 111 at the end part of the engagement groove 107 are pressed against the two straight parts 108 and 109 adjoining to the annular projecting part 104. Thus, for example, even though the pulling force works on the plug 3 after the construction is completed and the plug 3 and the expansion part 106 is relatively displaced slightly in the axial direction, the relative displacement does not immediately produce the force of reducing the expanding claw parts 106a in diameter as long as they are relatively displaced over the width of the straight parts 108 and 109, not producing a clearance between the expanding claw parts 106a and the tapered surface 21a of the tapered hole part 21. Accordingly, this also suppresses the phenomenon of each of the expanding claw parts 106a returning in the direction of reducing the diameter, and the pulling resistance is further enhanced.

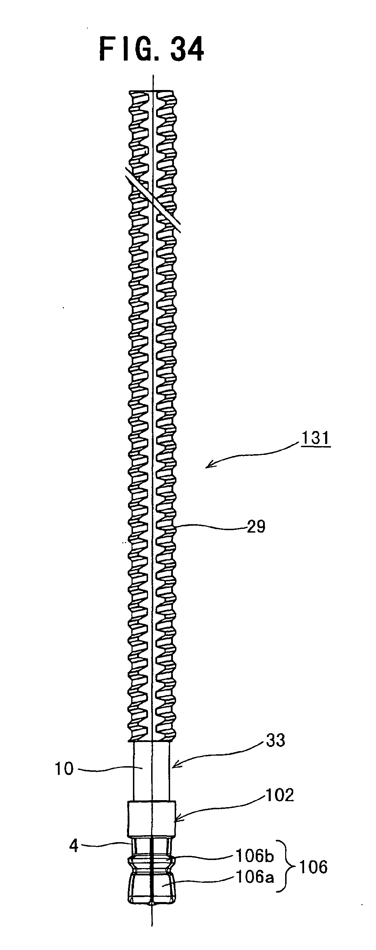

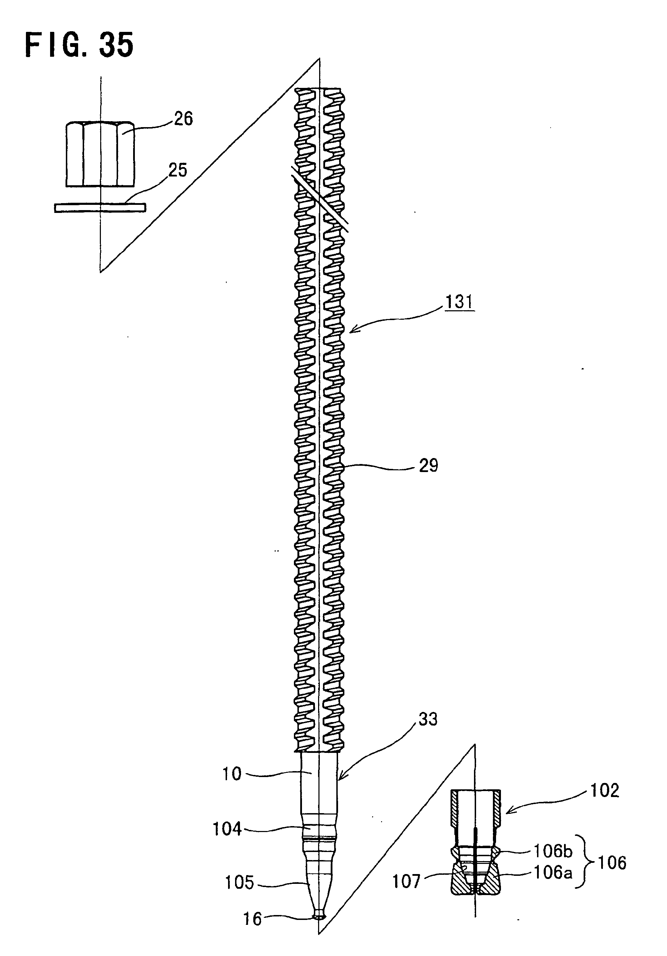

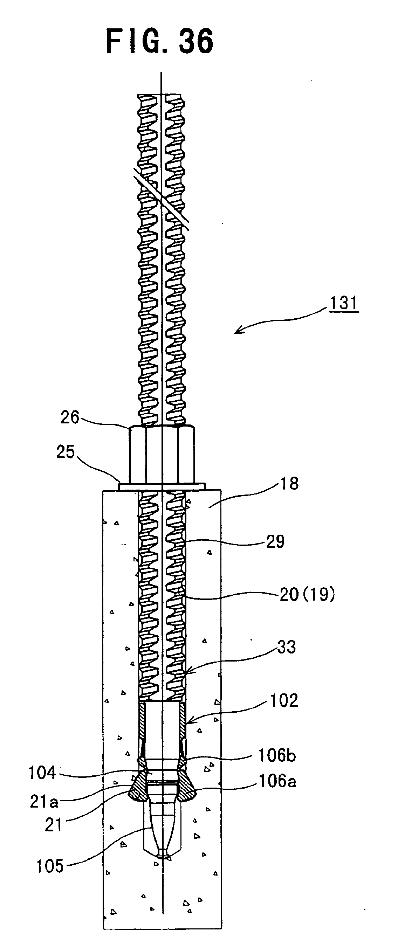

Figs. 34 to 36 depict a twelfth embodiment of the anchor according to the invention. Fig. 34 depicts a front view, Fig. 35 depicts an exploded diagram, and Fig. 36 depicts a cross section after a sleeve 102 is expanded. The parts common to those in the eleventh embodiment are assigned the same reference numerals and signs. In addition, the twelfth embodiment corresponds to the invention as claimed in claims 1 to 3, 5, 6, 8 and 13 to 17.

In the twelfth embodiment shown in Figs. 34 to 36, it is different from the eleventh embodiment in that a large-diameter shaft part of a plug 33 in an anchor 131 is formed of a long deformed bar for reinforced concrete (deformed steel bar with threads) 29 the same as that in the third and fourth embodiments (refer to Figs. 11 to 15). The deformed bar 29 for reinforced concrete also serves as a male thread on which a nut 26 is screwed together through a washer 25.

The construction procedures of the anchor 131 of the twelfth embodiment are completely the same as those in the third and fourth embodiments shown in Figs. 11 to 15, and completely the same effects and advantages as those of the eleventh embodiment can be obtained.

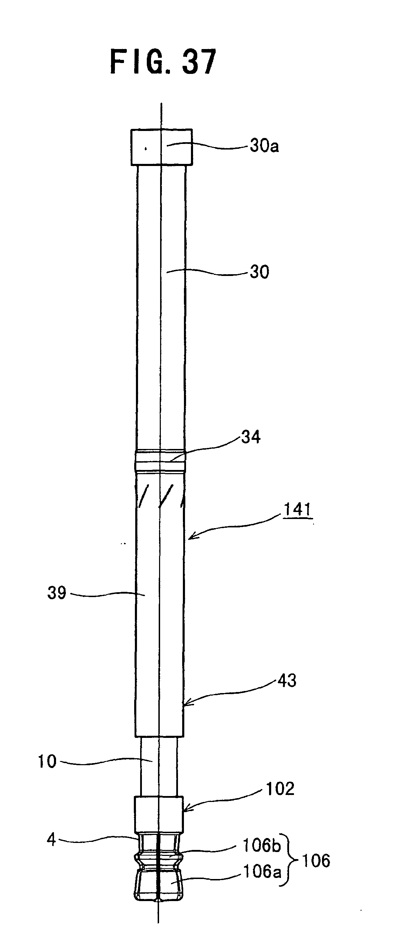

Fig. 37 depicts a thirteenth embodiment of the anchor according to the invention; the parts common to those in the eleventh embodiment are assigned the same reference numerals and signs. In addition, the thirteenth embodiment corresponds to the invention as claimed in claims 1 to 3, 5 to 7 and 13 to 17.

As shown in Fig. 37, an anchor 141 of the thirteenth embodiment is different from that of the eleventh embodiment in that an extension rod 30 similar to that in the fifth embodiment (refer to Fig. 16) is extended and formed integrally on the upper side of a large-diameter shaft part 39 in a plug 43. A female thread part for joining a given counterpart structure is formed at a head 30a of the extension rod 30 as similar to Fig. 29, and a marking 34 for an indicator in hammering is formed on the border between the large-diameter shaft part 39 and the extension rod 30. Also in the thirteenth embodiment, completely the same advantages as those of the eleventh embodiment can be obtained.

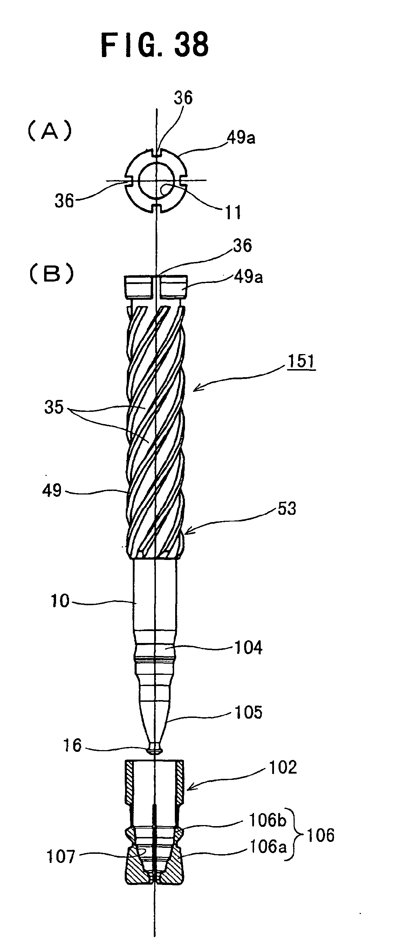

Furthermore, Fig. 38 depicts a fourteenth embodiment of the anchor according to the invention; the parts common to those in the eleventh embodiment are assigned the same reference numerals and signs. in addition, the fourteenth embodiment corresponds to the invention as claimed in claims 1 to 3, 5 to 7, 9 and 13 to 17.

In an anchor 151 of the fourteenth embodiment, helical grooves 35 in a thread groove form similar to those in the sixth embodiment (refer to Fig. 17) are formed on the outer surface of a large-diameter shaft part 49 in a plug 53, and notch grooves 36 are formed on a head 49a so as to communicate with the space between the helical grooves 35.

Therefore, the construction procedures of the anchor 151 of the fourteenth embodiment are completely the same as those of the sixth embodiment shown in Fig. 17, and completely the same effects and advantages as those of the eleventh embodiment can be obtained.

Here, as for a drill bit for drilling the prepared hole 19 in a special form that is needed in the construction of the anchor of each of the embodiments, for example, the prepared hole can be worked easily with the use of the drill bit that is improved based on the drill described in a brochure of WO 01/06070.

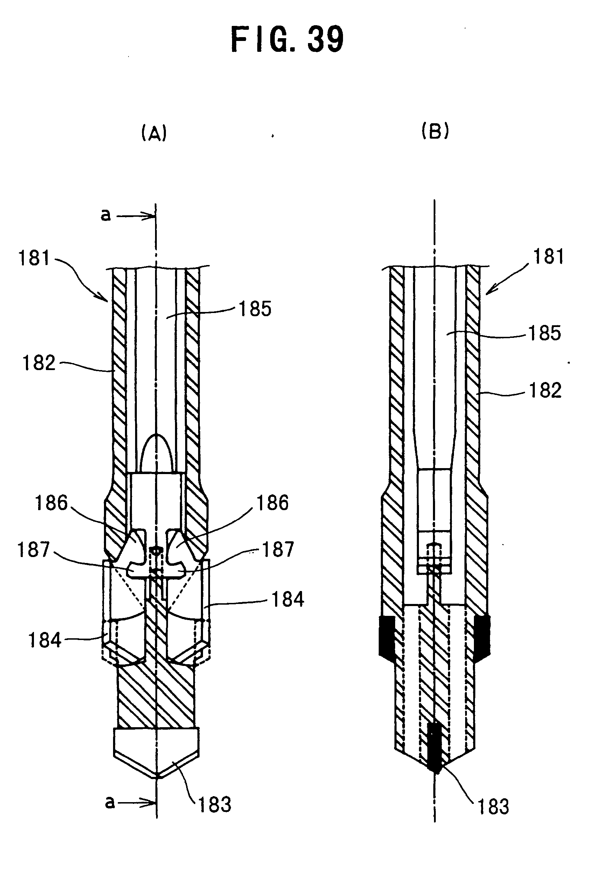

More specifically, Figs. 39 to 41 depict the general configuration of the drill bit improved for constructing the anchor of each of the embodiments. A cutter body 182 in a hollow cylindrical shape at the distal end of a drill bit 181 is mounted with a straight hole cutter blade 183 to be a small-diameter blade part by brazing and the like so as to cross in the diameter direction. At the positions upward near the straight hole cutter blade 183 and facing to each other as the straight hole cutter blade 183 is sandwiched, that is, at the positions shifted in the phase at 90 degrees with respect to the straight hole cutter blade 183, undercutting cutter blades 184 are mounted, which are a large-diameter blade part movable or rocking opening and closing. Furthermore, a slidable operating rod 185 is inserted into the cutter body 182 beforehand.

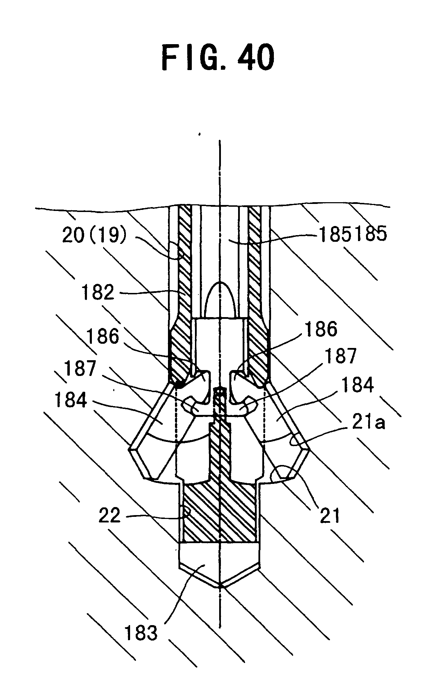

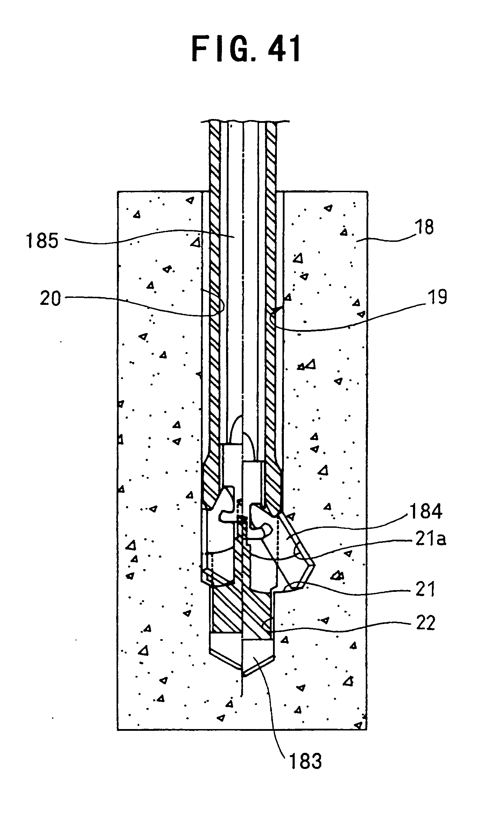

Moreover, in the undercutting cutter blades 184, a hook part 186 thereof is engaged with a holding lock part 187 at the lower end of the operating rod 185. The force of lifting the operating rod 185 generally works, and thus the undercutting cutter blades 184 are unexpanded as shown in Fig. 39(A). However, the operating rod 185 is pressed downward to expand each of the undercutting cutter blades 184 as they are rocked, as shown in Figs. 40 and 41.

Therefore, when the distal end of the cutter body 182 is pressed against a concrete structure 18 to start drilling work as the drill bit 181 is rotated and driven, the straight hole cutter blade 183 at the distal end of the cutter body 182 and the undercutting cutter blades 184 gradually proceed to drill the prepared hole 19. At this time, the straight hole cutter blade 183 first works the straight hole part 22 at the farthest end. Subsequently, the undercutting cutter blades 184 drill the prepared hole general part 20 having a larger diameter than that of the straight hole part 22 so as to expand the straight hole part 22 in diameter. More specifically, in the middle of drilling the prepared hole, it is always in a so-called stepped prepared hole shape formed of the straight hole part 22 and the prepared hole general part 20 having a larger diameter than that of the straight hole part 22.

In the meantime, the operating rod 185 is pressed downward at the time when the depth of the prepared hole 19 in the middle of drilling becomes a predetermined depth, and then the undercutting cutter blades 184 are rocked and gradually expanded outside. Accordingly, the straight hole cutter blade 183 drills the straight hole part 22 so as to further increase the depth of the prepared hole 19 having been in the given depth before, and the undercutting cutter blades 184 expand the upper step part of the straight hole part 22 in diameter to be the tapered hole part 21 having the tapered surface 21 a (refer to Fig. 5(A)).

As described above, according to the drill bit 181, the straight hole is first worked, the operating rod 185 is pressed in at the time when the straight hole reaches the predetermined depth as similar to the general drilling work, and then the tapered hole part 21 to be the undercut part is autonomously worked. Therefore, the prepared hole 19 having the tapered hole part 21 in the undercut shape can be worked with completely the same perception as that of the general drilling work and with no complicated operations for the drill bit 181.

More specifically, in working the tapered hole part 21, which is functionally most important, the cutter body 182 of the drill bit 181 is operated in which the undercutting cutter blades 184 are gradually expanded in diameter to work the tapered hole part 21 in the state that the parts other than the undercutting cutter blades 184 to be the large-diameter blade part are guided by the prepared hole general part 20 and the straight hole part 22. Thus, a shake and the like are not generated in the undercutting cutter blades 184, and the tapered hole part 21 can be worked accurately, concentrically with the prepared hole general part 20 and the straight hole part 22.

## Claims

1. A post-construction anchor comprising a sleeve having an expansion part and a plug formed with a tapered part inserted into the sleeve for expanding the expansion part, the anchor being adapted to an undercut-type prepared hole having near a bottom thereof a diameter expanded in a taper way, **characterized in that**
when the plug is hammered with the sleeve contacting the bottom of the prepared hole, an inner peripheral surface of the expansion part is engaged with an outer peripheral surface of the plug in a concavo-convex way as the expansion part expands until the expansion part makes close contact with the tapered surface of the prepared hole in accordance with relative displacement between the expansion part and the plug, and
that, at the same time, by a hole-bottom reaction force generated by the plug contacting the bottom of the prepared hole, a construction is completed with the expansion part making press contact with the tapered surface of the prepared hole.

2. The post-construction anchor as claimed in claim 1, **characterized in that** an annular engagement groove is formed in the inner peripheral surface of the expansion part, and an annular projecting part is formed on the outer peripheral surface of the plug, and
that the engagement groove is engaged with the annular projecting part in a concavo-convex way when the expansion part expands to contact the tapered surface of the prepared hole in accordance with the relative displacement between the expansion part and the plug.

3. The post-construction anchor as claimed in claim 1 or 2, **characterized in that**, with the expansion part being unexpanded, a flange part at a distal end of the plug is locked at an inner periphery opening edge at a distal end of the sleeve for preventing disengagement of the sleeve from the plug.

4. The post-construction anchor as claimed in claim 3, **characterized in that**, with the expansion part being unexpanded, the outer peripheral surface of the plug is engaged with the inner peripheral surface of the sleeve in a concavo-convex way for preventing disengagement of the plug from the sleeve, and as a consequence, the flange part at the distal end of the plug is locked at an inner periphery opening edge at the distal end of the sleeve for preventing disengagement of the sleeve from the plug.

5. The post-construction anchor as claimed in any one of claims 1 to 4, **characterized in that** the prepared hole is formed with a straight hole part having a diameter smaller than that of a prepared hole general part, the straight hole part being continuously formed with a bottom of a tapered hole part having a diameter expanded in a taper way, and
that the unexpanded expansion part contacts the bottom of the tapered hole part prior to expansion of the expansion part, whereas the distal end of the plug contacts a bottom of the straight .hole part upon completion of the construction.

6. The post-construction anchor as claimed in claim 5, **characterized in that** the plug is formed in a stepped shank, and
that the unexpanded sleeve is inserted into and supported in a small-diameter shank part to thereby set an outer diameter of a general part of the plug and that of a general part of the unexpanded sleeve at roughly the same dimension.

7. The post-construction anchor as claimed in any one of claims 1 to 6, **characterized in that** the plug is formed with a female thread part.

8. The post-construction anchor as claimed in any one of claims 1 to 6, **characterized in that** the plug includes a deformed bar for reinforced concrete.

9. The post-construction anchor as claimed in any one of claims 1 to 7, **characterized in that** helical grooves of thread groove shape are formed in the outer peripheral surface of the plug.

10. The post-construction anchor as claimed in any one of claims 1 to 9, **characterized in that** the plug is formed with a restraint ring which can receive a part of the sleeve, and
that, at the final stage of expanding the expansion part, an end of the restraint ring abuts on the outer peripheral surface of the expansion part to restrain an expanded bend part.

11. The post-construction anchor as claimed in claim 10, **characterized in that** a groove engaged with the end of the restraint ring is formed in the outer peripheral surface of the expansion part.

12. The post-construction anchor as claimed in claim 10 or 11, **characterized in that** the restraint ring is fixed to the plug beforehand by press-fit or welding.

13. The post-construction anchor as claimed in claim 2 or 3, **characterized in that** the annular projecting part of the outer peripheral surface of the plug at a part near the top includes a cylindrical straight part, and
that when the expansion part expands to contact the tapered surface of the prepared hole, a part of the engagement groove makes close contact with a part of the straight part.

14. The post-construction anchor as claimed in claim 13, **characterized in that** the prepared hole is formed with a straight hole part having a diameter smaller than that of a prepared hole general part, the straight hole part being continuously formed with a bottom of the tapered hole part having a diameter expanded in a taper way, and
that the unexpanded expansion part contacts the bottom of the tapered hole part prior to expansion of the expansion part, whereas the distal end of the plug contacts a bottom of the straight hole part upon completion of the construction.

15. The post-construction anchor as claimed in claim 14, **characterized in that** the expansion part has an expanding claw and an auxiliary expanding claw on the root side of the expanding claw, and
that, in parallel with the expanding claw part making press contact with the tapered surface of the tapered hole part, the auxiliary expanding claw is plastically deformed and engaged in an inner peripheral surface of the prepared hole general part upon completion of the construction.

16. The post-construction anchor as claimed in claim 15, **characterized in that** the construction is completed with a distal end surface of the expansion part makes press contact with the bottom of the tapered hole part.

17. The post-construction anchor as claimed in claim 16, **characterized in that**, during a period from when the unexpanded expansion part sequentially expands and contacts the bottom of the tapered hole part to completion of the construction, the distal end surface of the expansion part makes always press contact with the bottom of the tapered hole part.

18. A drill bit for drilling an undercut-type prepared hole prior to the construction of a post-construction anchor adapted to the prepared hole, the prepared hole having near a bottom thereof a tapered hole part having a diameter expanded in a taper way and a straight hole part having a diameter smaller than that of a prepared hole general part, the straight hole part being continuously formed with a bottom of the tapered hole part, **characterized in that**
a small-diameter blade part is provided to a cutter body at a distal end thereof for drilling the straight hole, and a large-diameter blade part is provided to the cutter body on the side opposite to the small-diameter blade part for drilling the prepared hole general part, the large-diameter blade part being swingable and retractable radially,
that, in a process of drilling the prepared hole, the small-diameter blade part first drills the straight hole part, and then the large-diameter blade part in the unexpanded diameter state drills the prepared hole general part in such a way as to expand the diameter of the straight hole part, and
that, when a depth of the prepared hole reaches a predetermined depth, the large-diameter blade part protrudes swingably radially to thereby expand the diameter of the large-diameter blade part, expanding the diameter of a part of the prepared hole general part close to the straight hole part in a taper way, thus working the tapered hole part.

19. The drill bit for working the prepared hole as claimed in claim 18, **characterized in that** the small-diameter blade part includes a straight hole cutter blade, and the large-diameter blade part includes an undercutting cutter blade, and
that an operating rod inserted into the cutter body concentrically therewith is engaged with the undercutting cutter blade, and the undercutting cutter blade has a diameter expanded in accordance with slide displacement of the operating rod.
